# EUROPÄISCHE PATENTSCHRIFT

(11) **EP 2 893 183 B1**
(45) Veröffentlichungstag und Bekanntmachung des Hinweises auf die Patenterteilung: **07.09.2016**
(21) Anmeldenummer: 13732418.2
(22) Anmeldetag: 20.06.2013
(51) Int. Cl.: F03D 15/00

(54) **VERFAHREN UND REGELEINRICHTUNG FÜR EINE WINDENERGIEANLAGE SOWIE COMPUTERPROGRAMMPRODUKT, DIGITALES SPEICHERMEDIUM UND WINDENERGIEANLAGE**
METHOD AND CONTROL DEVICE FOR A WIND TURBINE, AND COMPUTER PROGRAM PRODUCT, DIGITAL STORAGE MEDIUM AND WIND TURBINE
PROCÉDÉ ET DISPOSITIF DE COMMANDE D'UNE ÉOLIENNE ET PRODUIT-PROGRAMME INFORMATIQUE, SUPPORT NUMÉRIQUE ET ÉOLIENNE

(30) Priorität: 03.09.2012 DE 102012215575
(43) Veröffentlichungstag der Anmeldung: 15.07.2015
(73) Patentinhaber: Wobben Properties GmbH, 26607 Aurich (DE)
(72) Erfinder: BAUMGÄRTEL, Christian, 26603 Aurich (DE)
(74) Vertreter: Eisenführ Speiser
(86) Internationale Anmeldenummer: PCT/EP2013/062867
(87) Internationale Veröffentlichungsnummer: WO 2014/032826

(56) Entgegenhaltungen:
- EP-A2- 2 072 814
- EP-A2- 2 369 177
- WO-A1-2012/095111

## Beschreibung

Die Erfindung betrifft ein Verfahren zum Betreiben einer Windenergieanlage, bei welchem der Rotor zum Stillstand gebracht und arretiert wird wobei der Rotor abgebremst wird auf eine Stillstandposition positioniert wird und in der Stillstandposition festgestellt wird. Die Erfindung betrifft auch eine Regeleinrichtung zum Betreiben der Windenergieanlage sowie ein entsprechendes Computerprogrammprodukt und ein digitales Speichermedium mit dem Computerprogrammprodukt. Die Erfindung betrifft auch eine Windenergieanlage mit einer Gondel an der ein windantreibbarer Rotor über eine Rotornabe an einen Generator antriebsgekoppelt ist, wobei der Rotor zum Stillstand gebracht und festgestellt werden kann durch Abbremsen, Positionieren und Feststellen des Rotors.

Bei einer Windenergieanlage der eingangs genannten Art ist es bekannt, eine Bremsfunktion für den Rotor vorzusehen, die in der Lage ist, den Rotor von einer Nenndrehzahl auf eine abgebremste Drehzahl herunterzubremsen; entsprechend ist z.B. eine mechanische oder aerodynamische Bremsfunktion für den Rotor als Teil des Antriebsstrangs oder an den Rotor gekoppelt vorgesehen. Die mechanische Bremsfunktion wird insbesondere in Fällen zugestellt, in denen sich eine aerodynamische Bremsfunktion als unzureichend erweist. Eine aerodynamische Bremsfunktion tritt dann ein, wenn der Rotor unter Verstellen eines Pitch-Winkels der Rotorblätter gewollt abgebremst wird; dies kann einen Rotor sehr effektiv auf eine geringere Drehzahl bringen, jedoch diesen regelmäßig nicht zum Stillstand bringen oder auf eine verlässliche Stillstandsposition bringen. Eine ungewollte aerodynamische Bremsfunktion tritt bei einem Strömungsabriss am Rotorblatt oder bei einer dergleichen unerwünschten aerodynamischen Wirkung ein.

Befindet sich die Windenergieanlage in einem ausreichend abgebremsten Betriebsmodus des Rotors kann diese unter Abschätzen einer Restdrehzahl des Rotors sowie einer Zufahrtzeit der Bremse mit einer mechanischen --beispielsweise elektromechanisch oder hydraulisch antreibbaren-- Bremse sowie einer Verzögerungswirkung derselben zum Stillstand gebracht werden. Die endgültige Stillstandposition liegt jedoch im Rahmen einer Abschätzgenauigkeit eines Servicepersonals betreffend die obigen Parameter der Restdrehzahl des Rotors sowie betreffend Zufahrtzeit und Verzögerung einer mechanischen Bremse und ist insofern unsicher. Um also einen Rotor verlässlich zum Stillstand zu bringen und bei Stillstand feststellen zu können muss der Rotor im Rahmen der Abschätzgenauigkeit derart positioniert werden, dass eine feststellfähige Position genau erreicht wird und der Rotor bei dieser ausreichend lange im Stillstand verharrt. Andererseits erweist es sich als aufwändig, eine feststellfähige, insbesondere arretierfähige Position zu finden, da eine Feststellposition, insbesondere Arretierungsstellung im Rahmen der Positionierung im Bremsvorgang grundsätzlich nicht festgelegt ist, sondern der Erfahrung des Servicepersonals unterliegt.

Arbeiten am Rotor sollten nur im festgestellten, insbesondere arretierten Zustand desselben erlaubt sein; die Zeit zum Feststellen, insbesondere Arretieren desselben, geht somit von der eigentlichen Servicezeit ab und sollte möglichst gering gehalten werden. In einem Notfall kann ausnahmsweise in drastischer Vorgehensweise eine abschließende Arretierung des Rotors z. B. nur durch dynamisches Einbolzen erfolgen, bei welchem ein noch drehender Rotor mittels eines Arretierbolzens eingefangen und damit schlagartig zum Stillstand gebracht wird. Die Vorgehensweise beim dynamischen Einbolzen ist jedoch nachteilig für die Arretierteile der Windenergieanlage, was insbesondere fatal ist, wenn Schäden an einer Feststellvorrichtung hervorgerufen werden. Beim Versuch, ein dynamisches Einbolzen bei drehendem Rotor umzusetzen, wird z.B. ein Arretierbolzen an einem Arretiersteg entlanggleiten und unter Überlast in eine Arretiernut einrasten; dies wird den Arretiersteg abreiben und im Bereich der Arretiernut können Teile des Arretierstegs wegbrechen; dies kann dazu führen, dass die Arretierteile ein Arretieren der Windenergieanlage nicht mehr gewährleisten können. Wünschenswert wäre eine verlässliche Positionierbarkeit des Rotors beim Abbremsen, um diesen fehlerfrei feststellen, insbesondere arretieren, zu können. Insbesondere ist es wünschenswert, ein dynamisches Einbolzen zu verhindern.

An dieser Stelle setzt die Erfindung ein, deren Aufgabe es ist, ein Verfahren und eine Vorrichtung anzugeben, welche es erlaubt, beim Herunterfahren einer Windenergieaniage, den Rotor in verbesserter Weise zu Positionieren, insbesondere feststellen, vorzugsweise arretieren zu können. Vorzugsweise betrifft dies ein Verfahren zum betriebsbedingten Herunterfahren der Windenergieanlage. Insbesondere soll eine Positionierung derart zuverlässig erfolgen, dass ein Feststellen, insbesondere eine Arretierung in der Stillstandposition ohne Schädigung eines stehenden Teils der Windenergieanlage und automatisch möglich ist. Insbesondere soll eine Positionierung des Rotors entsprechend einer voreingestellten Endposition möglich sein.

Die Aufgabe betreffend des Verfahrens wird durch die Erfindung mit einem Verfahren zum Betreiben einer Windenergieanlage des Anspruchs 1 gelöst. Erfindungsgemäß ist vorgesehen, dass eine Endposition vorgegeben wird, der Rotor geregelt auf eine der Endposition zugeordnete Stillstandposition abgebremst wird, und zum Positionieren für die vorgegebene Endposition der Rotor automatisiert bis zum Stillstand auf der Stillstandposition abgebremst wird, und zum Feststellen, insbesondere Arretieren, in der Stillstandposition eine mechanische Feststellvorrichtung zugestellt wird. Insbesondere kann die mechanische Feststellvorrichtung automatisch zugestellt werden.

Das Konzept der Erfindung führt auf eine Regeleinrichtung des Anspruchs 21 für eine Windenergieanlage, die ausgebildet ist zur Ausführung des erfindungsgemäßen Verfahrens zum Betrieb der Windenergieanlage, insbesondere zum betriebsbedingten Herunterfahren der Windenergieanlage. Das Konzept der Erfindung führt auch auf ein Computerprogrammprodukt des Anspruchs 22 sowie ein digitales Speichermedium des Anspruchs 23.

Die Aufgabe betreffend die Vorrichtung wird durch die Erfindung mit einer Windenergieanlage des Anspruchs 24 gelöst. Erfindungsgemäß weist die Windenergieanlage eine Regeleinrichtung auf, die ausgebildet ist eine Eingabe einer Endposition aufzunehmen, eine Abbremsung des Rotors auf eine der Endposition zugeordnete Stillstandposition zu regeln, und beim Positionieren für die vorgegebene Endposition den Rotor automatisiert bis zum Stillstand auf der Stillstandposition abzubremsen, und zum Feststellen, insbesondere Arretieren, in der Stillstandposition das Zustellen einer mechanischen Feststellvorrichtung zu erfassen, insbesondere eine mechanische Feststellvorrichtung automatisch zuzustellen.

Das Konzept der Erfindung erweist sich als ausreichend präzise und verlässlich bei der Einstellung der Stillstandposition. Insbesondere ist es im Rahmen einer besonders vorteilhaften Weiterbildung möglich, zum Feststellen, insbesondere Arretieren, in der Stillstandposition eine mechanische Feststellvorrichtung vorzusehen, welche automatisch zugestellt wird. Dies kann mit einer Drehmoment haltenden Kraft vorgenommen werden, die entsprechend den aerodynamischen Kräften am Rotor ausgelegt ist z.B. gemäß einer existierenden Windgeschwindigkeit ausgelegt sein kann. Grundsätzlich ist auch ein manuelles Zustellen der mechanischen Feststellvorrichtung möglich. Im automatischen als auch manuellen Zustellvorgang erweist es sich als vorteilhaft, dass die Stillstandposition für ein Feststellen, insbesondere eine Arretierung, geeignet ist. Insbesondere erweist sich dies als vorteilhaft für eine mechanische Feststellvorrichtung, die einen Formschluss zwischen einem stehenden Teil der Windenergieanlage und einem Teil des Rotors zum Arretieren in der Stillstandposition nutzt. Grundsätzlich ist zusätzlich oder alternativ ein Reibschluss möglich. Das Konzept der Erfindung bietet damit die Basis für ein möglichst widerstandsfreies und einfaches sowie sicheres Zustellen einer mechanischen Feststellvorrichtung, insbesondere zum Arretieren des Rotors in der Stillstandposition mit dem Ziel, ein Wiederanlaufen des Rotors zu verhindern.

Insbesondere ist ein manueller Einbolz- oder Arretiervorgang, wie er bislang manuell zu justieren ist, auf Grundlage des Konzepts nunmehr nicht von der persönlichen Erfahrung eines Personals zwangsläufig abhängig. Auch erhöht sich eine Arbeitssicherheit, da ein Personal nicht notwendiger Weise zum rotierenden Bereich der Windenergieanlage in der Gondel vordringen muss, um für ein Feststellen, insbesondere eine Arretierung, eine Nachpositionierung des Rotors vornehmen zu müssen. So kann das Konzept eine z. B. trennende Schutzeinrichtung zudem vorsehen, die erst nach Feststellen, insbesondere Arretieren, des Rotors in der Stillstandposition zu Öffnen ist. Ein eingangs genanntes dynamisches Einbolzen ist dann gänzlich unmöglich gemacht und etwaige Schäden dadurch verhindert. Auch wird eine Wartungszeit im Servicefall reduziert, da ein Abbrems- und Positioniervorgang zunächst automatisch initiiert werden kann, z. B. bei Eintreffen des Servicepersonals am Turmfuß. Gegebenenfalls kann auch ein Feststellvorgang, insbesondere Arretiervorgang automatisch bereits initiiert werden. Insgesamt reduziert sich damit die Stillstandzeit einer Anlage.

Bevorzugte Weiterbildungen der Erfindung sind den Unteransprüchen zu entnehmen und geben dem einzelnen vorteilhafte Möglichkeiten an, das Konzept der Erfindung im Rahmen der Aufgabenstellung sowie im Hinblick auf vorteilhafte Möglichkeiten weiterzubilden.

Besonders bevorzugt sind eine oder mehrere verschiedene Bremsfunktionen vorgesehen; dies erhöht die Effektivität der Bremswirkung. Insbesondere kann eine mechanische Bremswirkung geregelt zugestellt werden, und/oder eine aerodynamische Bremswirkung geregelt erzeugt werden, und/oder eine Erregung des Generators, insbesondere Generator-Rotors, geregelt werden. Dazu kann ein Bremssystem mit einer mechanischen Betriebsbremse und/oder einer aerodynamischen Blattbremse, und/oder einer elektro-magnetischen Generatorbremse und/oder einer mechanischen Feststellvorrichtung, insbesondere zustellbar durch Reibschluss und/oder Formschluss, vorgesehen sein. Insbesondere hat sich gezeigt, dass eine oder mehrere der Bremsen im Rahmen des Bremssystems an eine Regeleinrichtung zur Regelung der Bremswirkung angeschlossen sind. So kann eine Stillstandsposition über eine vorgegebene Endposition vergleichsweise effektiv angefahren werden und verlässlich arretiert werden.

Bevorzugt ist zum Feststellen, insbesondere Arretieren in der Stillstandposition eine mechanische Feststellvorrichtung vorgesehen, die automatisch zugestellt wird. Dies macht ein manuelles Feststellen oder Arretieren des Rotors mit manuell betätigter Bremse oder dergleichen handbetätigter Bremsmittel weitgehend überflüssig und erhöht die Sicherheit im Servicefall.

Bevorzugt kann eine Arretierung zur Sicherung des Rotors gegen Wiederanlaufen durch Formschluss, insbesondere zusätzlich unter Reibschluss, erfolgen. Ein Formschluss kann beispielsweise durch eine Anzahl von formschlüssigen Feststellvorrichtungen mechanischer Art, wie z. B. durch ein, zwei oder mehrere Arretierbolzen zur Einbringung in Arretiernuten des Rotors, erfolgen. Dadurch wird unter Verringerung der Wartungszeit und gleichwohl erhöhter Sicherungsverlässlichkeit der Rotor arretierbar.

Im Rahmen einer besonders bevorzugten konstruktiv realisierten Weiterbildung kann die mechanische Betriebsbremse und die mechanische Feststellvorrichtung zusammen in einer Scheibenbremse integriert sein. Dies Bremssystem lässt sich vergleichsweise raumsparend und verlässlich realisieren. Besonders bevorzugt kann ein Feststellsteg, insbesondere eine Bremsscheibe, an einem drehenden Teil der Windenergieanlage, insbesondere an einem Rotornabengehäuse und/oder an einem drehenden Teil des Generators, wie z.B. einem Generator-Rotor, insbesondere einem Ringrotor eines Ringgenerators, angebracht sein. Besonders bevorzugt kann ein Bremsmittel --insbesondere eine Bremsbacke und/oder ein Arretierbolzen-- an einem feststehenden Teil der Windenergieanlage, insbesondere an einem Maschinenhausgehäuse und/oder einen stehenden Teil des Generators, wie z. B. einem Generator-Stator, angebracht sein. Insbesondere kann eine Bremsbacke am feststehenden Teil der Windenergieanlage zum Zustellen an den Feststellsteg, insbesondere die Bremsscheibe, ausgebildet sein und der Feststellsteg, insbesondere die Bremsscheibe, eine Anzahl von Arretiernuten aufweisen, die einer Anzahl von in die Arretiernuten eingreiffähigen Arretierbolzen zugeordnet sind.

Erfindungsgemäß wird die Stillstandposition unter Arretiernutzung eines Rastmoments des Generators eingestellt. Insbesondere kann eine Endposition des Rotors vorgegeben werden, indem eine Winkelstellung des Rotors vorgegeben wird und die Winkelstellung einer Rastposition des Generators zugeordnet wird.

Vorteilhaft wird eine kontinuierliche Winkelstellskala einer Endposition über eine diskrete Rastskala des Generators einer quasidiskreten Winkelskala einer Stillstandsposition zugeordnet, insbesondere eine diskrete Rastskala über ein Winkelteilung am Generator vorgegeben ist, die durch eine Arretiernuten- und/oder Pol-Verteilung über einen Generator-Ring, insbesondere Stator- und/oder Rotorring, vorgegeben ist.

Als besonders effektiv und mit Vorteil regelbar hat sich ein Verfahren zum Abbremsen erwiesen, bei dem eine Erregung des Generators, insbesondere Generator-Rotors, geregelt wird. Vorteilhaft werden beim Abbremsen die Polschuhe des Generator-Rotors erregt mit einer Erregung, die von einer Erregungsregelung in Abhängigkeit einer Erregungsbrems-Regelgröße vorgegeben wird, insbesondere die Erregungsbrems-Regelgröße eine oder mehrere Größen umfasst, die ausgewählt sind aus der Gruppe von Größen umfassend: Drehzahl, Verzögerung, Außentemperatur, Windgeschwindigkeit.

Die Weiterbildung geht von der Überlegung aus, dass sich eine Abbremsung des Rotors durch eine Erregung des Generators, insbesondere eines Generator-Rotors wie z. B. eines Polschuhes des Generators erreichen lässt. Die Weiterbildung hat darüberhinaus erkannt, dass eine zum Hervorrufen einer Abbremswirkung geeignete Erregung des Generators vorteilhaft im Rahmen einer Regelung genutzt werden kann, um eine Stillstandposition in geregelter Weise einzustellen, die einer voreingestellten Endposition in vorbestimmter Weise zugeordnet werden kann. Im Ergebnis erlaubt das Konzept eine automatische Positionierung des Rotors zum stehenden Teil der Gondel der Windenergieanlage. Mit Vorteile erlaubt das Konzept ein geregeltes Abbremsen des Rotors bis zum Stillstand in der Stillstandposition durch Regeln der Erregung des Generators.

Die Weiterbildung hat mit Vorteil erkannt, dass durch die Arretiernutzung der Erregung zur Verzögerung die Verzögerung des Rotors deutlich genauer geregelt werden kann, da eine Erregung zum Abbremsen oder Darstellen einer sonstigen Verzögerung des Rotors manuell eingestellt werden kann. Zum Beispiel könnte eine Erregung auf einem bestimmten Wert wie 30% oder dergleichen gewählt werden. Dahingegen kann eine elektromechanische Bremse zurzeit nur zwei Betriebszustände, nämlich regelmäßig nur geschlossen oder offen, darstellen, wie es zudem mit zum Teil unsicherer Wirkung. Dagegen kann die Erregung lastabhängig und vergleichsweise genau eingestellt werden im Rahmen eines Regelkreises, so dass eine punktgenaue Positionierung des Rotors grundsätzlich ermöglicht ist gemäß einer voreingestellten Endposition.

Bevorzugt werden wenigstens eine Drehzahl und eine Verzögerung des Rotors beim Abbremsen gemessen und zur Regelung der Erregung genutzt. Dazu kann beispielsweise ein Inkrementalgeber eine Messgröße betreffend die Drehzahl und/oder Verzögerung des Rotors als Istwert liefern. Eine Solldrehzahl und eine Sollverzögerung kann dann in einem Regler, beispielsweise einem PID-Regler oder dergleichen unter Arretiernutzung der Erregung als Stellgröße eingestellt werden.

Erfindungsgemäß wird ein Rastmoment des Generators genutzt, um eine Stillstandposition einzustellen, die einer voreingestellten Endposition zugeordnet ist. Beispielsweise kann vorteilhaft eine Endposition des Rotors voreingestellt werden, indem eine Winkelstellung des Rotors vorgegeben wird. Dies kann beispielsweise eine 12 Uhr-Stellung oder eine sonstige Winkelstellung zwischen 0 und 360° beispielsweise 10°, 20°, 30°, 40°, 50°, 60°, 70°, 80°, 90° oder vielfache davon sein. Ist die Winkelstellung des Rotors vorgegeben, kann der Winkelstellung eine Rastposition des Generators zugeordnet werden. Anders ausgedrückt hat es sich als vorteilhaft erwiesen, dass eine kontinuierliche Winkelstellskala einer Endposition einer diskreten Rastskala des Generators zugeordnet wird. Die Zuordnung kann eine erste Zuordnung unmittelbar nach Voreinstellung der Endposition des Rotors sein und sich dann beim Abbremsen dynamisch anpassen an die akute betriebsbedingte Situation beim Herunterfahren der Windenergieanlage. Vorteilhaft ist die Zuordnung zwischen einer kontinuierlichen Winkelstellskala und der diskreten Rastskala des Generators nicht statisch, sondern kann im Rahmen des Regelkreises dynamisch angepasst werden. Beispielsweise kann einer voreingestellten Endposition zunächst einer leicht erhöhten Stillstandposition und zu einem späteren Zeitpunkt einer leicht erniedrigten Stillstandposition zugeordnet werden, um möglichst nah an der voreingestellten Endposition zu bleiben.

Eine diskrete Rastskala ist beispielsweise über eine Winkelteilung am Generator vorgegeben. Eine Winkelteilung ist insbesondere durch eine Arretiernuten- und/oder Polverteilung über einen Generatorring gegeben ist, insbesondere über einen Stator- und/oder Rotorring bei einem Ringgenerator gegeben ist.

Als Erregungsbremsregelgröße kann beispielsweise eine Drehzahlverzögerung, Außentemperatur oder Windgeschwindigkeit dienen. Als Bremszustellregelgröße kann beispielsweise eine Drehzahlposition, Außentemperatur oder Windgeschwindigkeit dienen. Anders ausgedruckt kann die Erregung des Generators, insbesondere Generator-Rotors, in Abhängigkeit einer aktuell gemessenen Drehzahl und/oder Verzögerung des Rotors eingestellt werden. Zusätzlich kann auch eine Außentemperatur und eine Windgeschwindigkeit herangezogen werden. Insbesondere kann die Windgeschwindigkeit auch zur Regelung einer aerodynamischen Bremswirkung eines Rotorblattes des Rotors genutzt werden. Eine mechanische Bremse kann ebenfalls in geregelter Weise gemäß einer Bremszustellregelungsgröße vorgegeben werden. Auch dazu kann insbesondere eine Drehzahl und/oder Position des Rotors genutzt werden. Als Bremszustellregelgröße kann auch eine Außentemperatur und eine Windgeschwindigkeit dienen. Insbesondere kann die Weiterbildung vorsehen, dass eine mechanische Bremse erst unterhalb eines Schwellwertes der Bremszustellgröße zugestellt wird. Das Verfahren sieht in dieser Weiterbildung bevorzugt in einem ersten frühen Abbremsvorgang lediglich eine Abbremsung durch eine Erregung des Generators vor und in einem zweiten späteren Abbremsvorgang das Abbremsen mittels einer Erregung des Generators und einer mechanischen Bremse. Vorteilhaft sinkt damit die Belastung der mechanischen Bremse. Insbesondere könnte eine mechanische Bremse mit weniger Aufwand und gleichwohl wirkungsvoller dimensioniert werden. Gegebenenfalls könnte eine mechanische Bremse auf einen kleineren Lastbereich dimensioniert werden.

Insbesondere kann zusätzlich zur geregelten Erregung und einer mechanischen Betriebsbremse zum Abbremsen des Rotors auch eine geregelte aerodynamische Bremswirkung eines Rotorblattes des Rotors genutzt werden, indem dieses in geregelter Weise aus dem Wind gepitcht wird. Eine Kombination einer aerodynamischen Bremswirkung und einer Erregerbremswirkung sowie einer mechanischen Bremse zum Abbremsen des Rotors hat sich als besonders geeignet für ein Regelkreis erwiesen. Bevorzugt lässt sich das Verfahren in der Weiterbildung umsetzen, um die Windenergieanlage bis zum Stillstand des Rotors herunterzufahren.

Besonders bevorzugt lässt sich die Regeleinrichtung kalibrieren und/oder als offenes System zu lernenden Optimierung ausbilden. Insbesondere betrifft dies eine Regeleinheit für eine Zustellbremsregelung, die kalibriert werden kann und/oder als offenes System zu lernenden Optimierung der Bremszustellung ausgebildet sein kann. Insbesondere betrifft dies zusätzlich oder alternativ eine Regeleinheit für die Erregungsbremsung, die entweder kalibriert und/oder als offenes System zu lernenden Optimierung ausgebildet sein kann. Sowohl anhand einer Kalibrierbremsung als auch an einer Vielzahl von Betriebsbremsungen optimiert sich somit eine Regeleinrichtung der Windenergieanlage und verkürzt mit zunehmender Arretiernutzung die Wartungszeiten des Systems und die Verlässlichkeit der Positionierung des Rotors in einer Stillstandposition zur Arretierung.

Erfindungsgemäß wird eine Verteilung von Feststellpositionen, insbesondere eine Arretierpositionsverteilung auf eine Verteilung von Arretiernuten und/oder Polverteilung des Generators derart abgestimmt ist, dass eine Arretierposition der Arretierpositionsverteilung mit einer durch ein Rastmoment bedingten Raststellung des Generator-Rotors übereinstimmt. Grundsätzlich erzeugt jede Erregung ein sogenanntes Rastmoment, welches den Rotor in definierten, durch den mechanischen Aufbau des Generators bedingten Positionen zum Stillstand kommen lässt. Dies betrifft insbesondere eine Anzahl von Arretiernuten und eine Anzahl von Polpaaren. Es können auch weitere mechanische Aufbauten des Generators zur Erzeugung eines Rastmoments beitragen. Die Kombination aus Arretiernuten und Polen des Generators sowie der Arretiernut ist konstruktiv vorteilhaft wählbar derart, dass die Polfühligkeit, d. h. die durch Rastmoment bedingte Positionierung des Rotors, des Generators das Einbolzen und/oder Arretieren unterstützt.

Bevorzugt weist die Windenergieanlage
- eine mechanische Betriebsbremse, und/oder
- eine aerodynamische Blattbremse, und/oder
- eine elektro-magnetische Generatorbremse und/oder
- eine mechanische Feststellvorrichtung, insbesondere zustellbar durch Reibschluss und/oder Formschluss, wobei eine oder mehrere der Bremsen an eine Regeleinrichtung zur Regelung der Bremswirkung regelbar angeschlossen sind.

Es hat sich als vorteilhaft erwiesen, dass die mechanische Betriebsbremse einen ersten Zustellantrieb aufweist, mit der ein Bremsmittel, insbesondere eine Bremsbacke, an ein Laufmittel, insbesondere ein Feststellsteg und/oder eine Bremsscheibe, zustellbar ist. Die mechanische Betriebsbremse weist vorteilhaft eine erste Schnittstelle zu einer Regeleinrichtung zur Regelung der Bremswirkung, insbesondere Zustellung, auf.

Es hat sich als vorteilhaft erwiesen, dass die mechanische Feststellvorrichtung einen zweiten Zustellantrieb aufweist, mit der ein Bremsmittel, insbesondere ein Arretierbolzen und/oder eine Bremsbacke, an ein Arretiermittel, insbesondere eine Arretiernut und/oder eine Bremsscheibe, fixierbar ist. Die mechanische Feststellvorrichtung weist vorteilhaft eine zweite Schnittstelle zu einer Regeleinrichtung zur Regelung der Arretierwirkung auf.

Es hat sich als vorteilhaft erwiesen, dass die aerodynamische Blattbremse einen Pitchmotor aufweist, mit der ein Anstellwinkel des Blattes einstellbar ist und der eine dritte Schnittstelle zu einer Regeleinrichtung zur Regelung der Bremswirkung, insbesondere der Pitchstellung, aufweist.

Es hat sich als vorteilhaft erwiesen, dass die elektro-magnetische Generatorbremse eine vierte Schnittstelle zur Regelung der Erregung eines Polschuhs des Generator-Rotors und/oder eine fünfte Schnittstelle zur Übermittlung der Rastfühligkeit des Generators aufweist.

In dem Verfahren kann vorgesehen sein, dass die erste, zweite, dritte, vierte und/oder fünfte Schnittstelle in einer Regelschleife ansteuerbar ist.

Vorzugsweise sind bei der Windenergieanlage die mechanische Betriebsbremse und die mechanische Feststellvorrichtung in einer Scheibenbremse integriert. Vorzugsweise ist ein Feststellsteg, vorzugsweise mit einer Anzahl von Arretiernuten, insbesondere eine Bremsscheibe, der Scheibenbremse an einem drehenden Teil der Windenergieanlage und ein Bremsmittel an einem feststehenden Teil der Windenergieanlage angebracht. Die Bremsscheibe kann beispielsweise an einem Rotornabengehäuse angebracht sein. Das feststehende Teil der Windenergieanlage ist dann bevorzugt an einem Maschinenhausgehäuse angebracht.

Besonders bevorzugt kann ein Feststellsteg, insbesondere eine Bremsscheibe, an einem drehenden Teil des Generators, wie z.B. einem Generator-Rotor, insbesondere einem Ringrotor eines Ringgenerators, angebracht sein. Das feststehende Teil der Windenergieanlage ist dann bevorzugt an einer Statorbefestigung, insbesondere einem Statortragarm angebracht.

Das Bremsmittel ist bevorzugt eine Bremseinheit, vorzugsweise mit einer Bremsbacke und/oder einem Arretierbolzen oder dergleichen Feststellmittel, insbesondere weiter mit einem geeigneten Antrieb für das Feststellmittel.

Eine mechanische Bremse kann zusätzlich oder alternativ auch als Scheibenbremse im mechanischen Antriebsstrang des Maschinenhauses realisiert sein, insbesondere zwischen einer Rotornabe und dem Generator im Antriebsstrang.

Besonders bevorzugt ist eine Bremsbacke am festehenden Teil der Windenergieanlage zum Zustellen an die Bremsscheibe ausgebildet und die Bremsscheibe weist eine Anzahl von Arretiernuten auf, die einer Anzahl von in die Arretiernuten eingreiffähigen Arretierbolzen zugeordnet sind.

Ein Sensorsystem, insbesondere mit einem Inkrementalgeber und/oder einem Windmesser, ist zur Messung von Brems-Regelgrößen ausgebildet, die ausgewählt sind aus der Gruppe von Größen umfassend: Drehzahl, Position, Außentemperatur, Windgeschwindigkeit; und das Sensorsystem ist an eine Regeleinrichtung zur Regelung der Bremswirkung angeschlossen.

Ausführungsbeispiele der Erfindung werden nun nachfolgend anhand der Zeichnung beschrieben. Diese sollen die Ausführungsbeispiele nicht nur notwendigerweise maßstäblich darstellen, vielmehr ist die Zeichnung, die zur Erläuterung dient, in schematisierter und/oder leicht verzerrter Form ausgeführt. Im Hinblick auf Ergänzungen der aus der Zeichnung unmittelbar erkennbaren Lehren wird auf dem einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Nicht-Gleichgewichtswerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

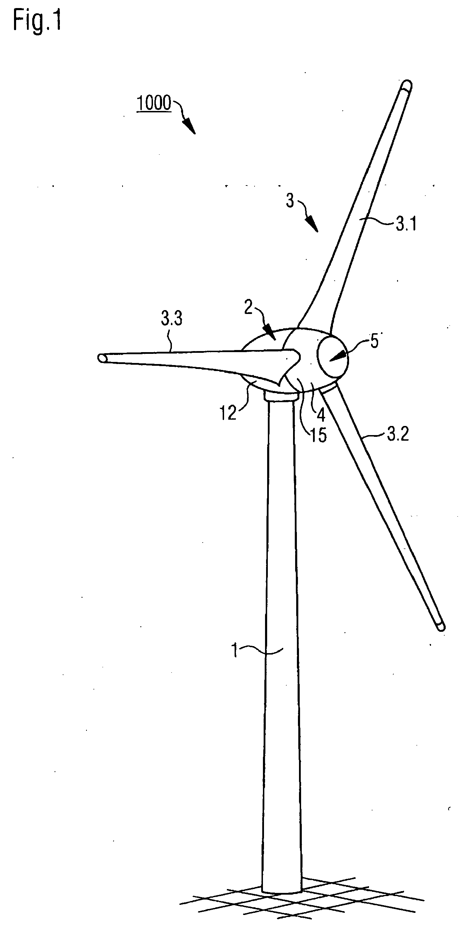

- Fig.1: eine bevorzugte Ausführungsform einer Windenergieanlage mit einer Gondel an der ein windantreibbarer Rotor über eine Rotornabe an einem Rotorkopf, an einen Generatorantrieb gekoppelt ist, wobei der Rotor zum Stillstand gebracht und festgestellt werden kann, durch geregeltes Abbremsen, vorbestimmtes Positionieren und automatisches Arretieren des Rotors;

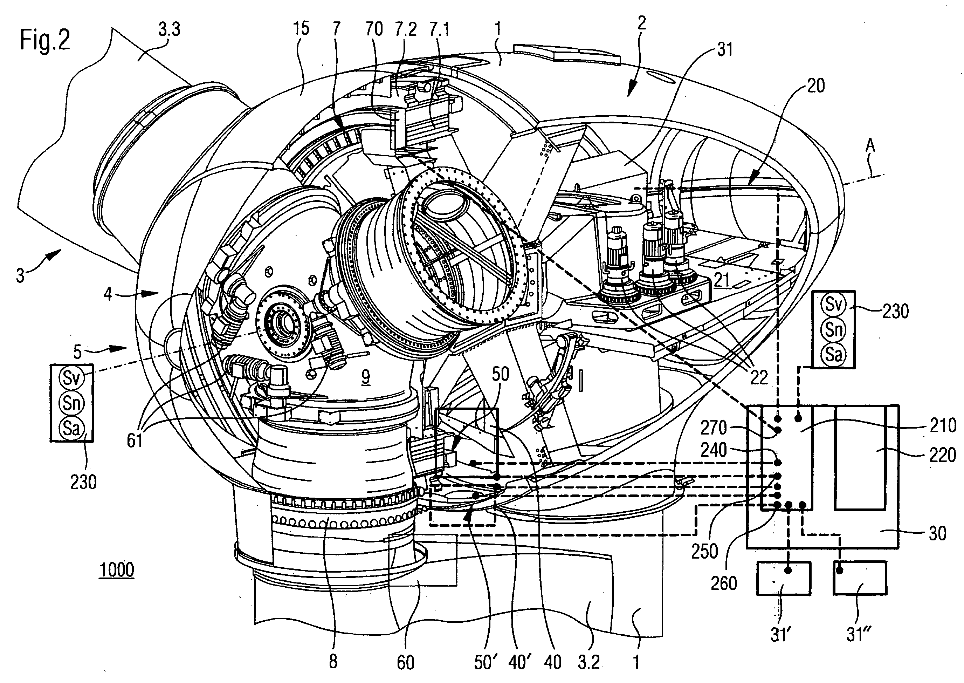

- Fig. 2: in einer perspektivischen Ausschnittsdarstellung, eine Gondel der Windenergieanlage der Fig. 1 mit einer schematisch dargestellten Regeleinrichtung zum Abbremsen, Positionieren und Arretieren des Rotors in der Stillstandposition, vorliegend unter Nutzung einer oder mehrerer unterschiedlicher Bremsfunktionen, nämlich einer mechanischen Bremse und/oder einer aerodynamischen Bremse und/oder einer elektro-magnetischen Bremse zum Herunterfahren und/oder einer Arretierung zum Arretieren im Stillstand - die Stillstandsposition nutzt eine Raststellung des Generators;

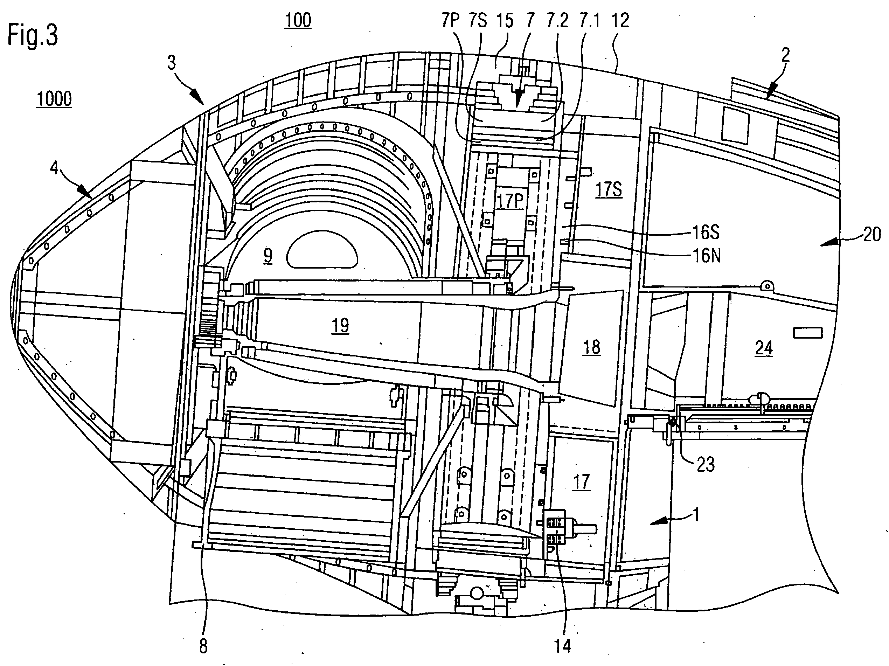

- Fig. 3: in einer Teil-Schnittansicht, die Gondel der Fig. 2 unter Darstellung einer besonders bevorzugten mechanischen Feststellvorrichtung;

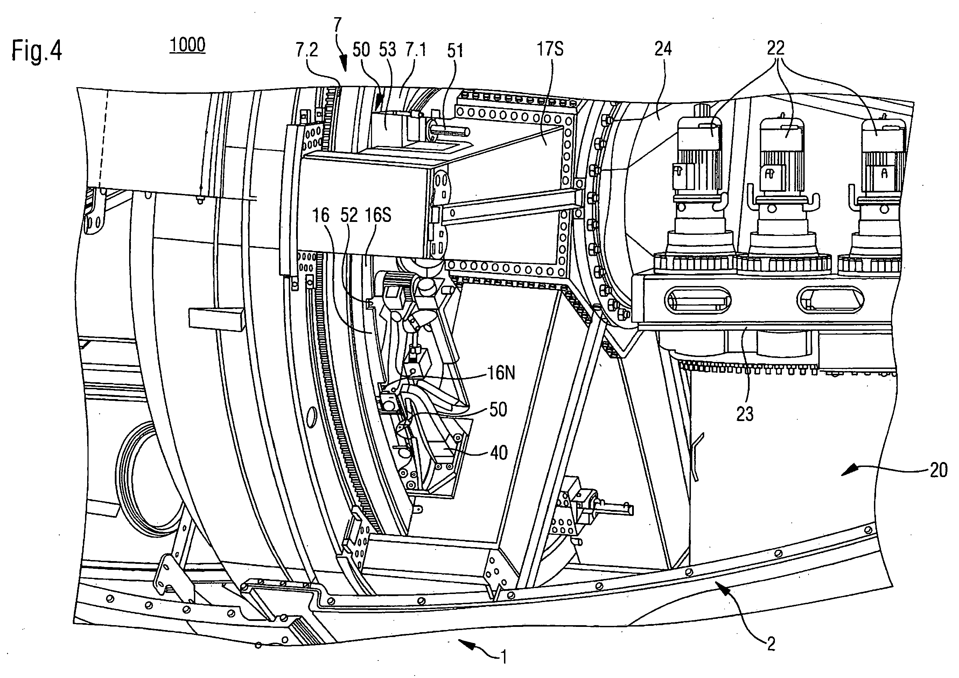

- Fig. 4: in einer teilperspektivischen anderen Ansicht, die besonders bevorzugte mechanische Feststellvorrichtung für die Gondel der Fig. 2;

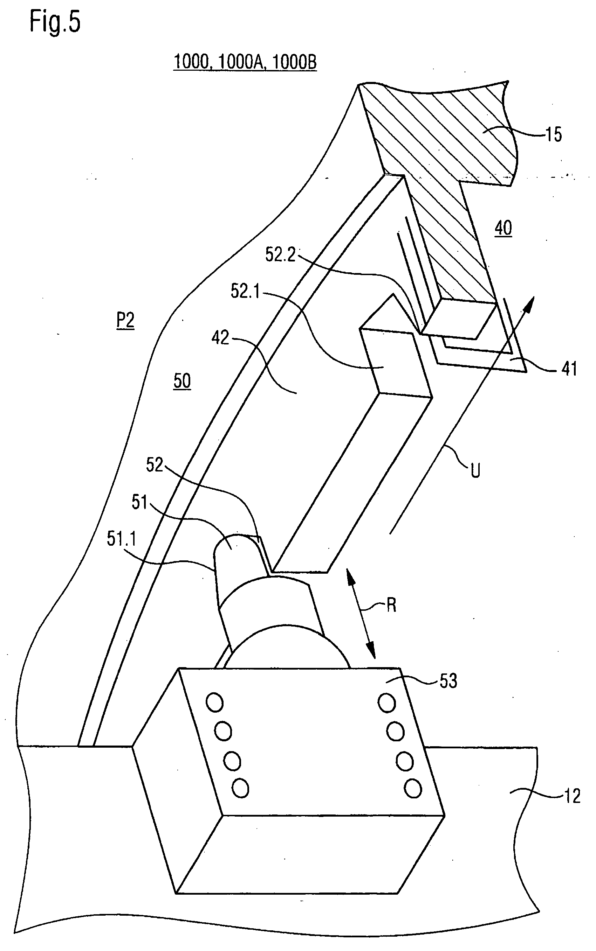

- Fig. 5: eine beispielhafte Darstellung der bevorzugten mechanischen Feststellvorrichtung am Generator, mit einer mechanischen Bremse in Form einer Scheibenbremse, bei der eine mechanische Betriebsbremse und eine Arretiervorrichtung zum Arretieren des Rotors in der Stillstandsposition mit dem Ziel, ein Wiederanlaufen des Rotors zu verhindern, in der Scheibenbremse integriert sind und wobei die mechanische Feststellvorrichtung einen Formschluss mittels Arretierbolzen und Arretiernuten und/oder einem Reibschluss vorsieht;

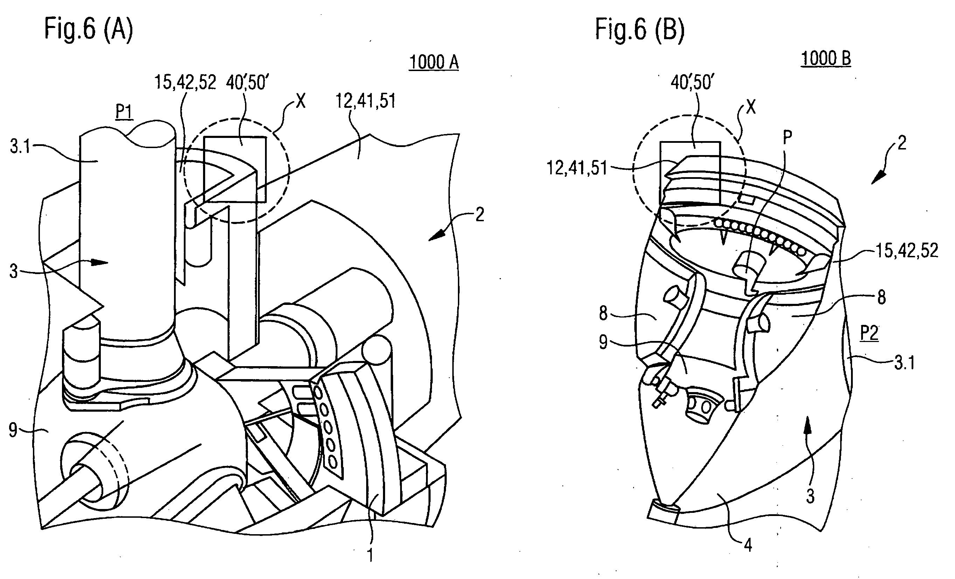

- Fig. 6: in Ansicht (A) im Bereich des Details X, die Möglichkeit zur Anbringung einer mechanischen Bremse und/oder Arretiervorrichtung als mechanische Feststellvorrichtung gemäß einer Variante zwischen einem Maschinenhausgehäuse und einem Rotornabengehäuse sowie in Ansicht (B) das Detail X aus einer anderen perspektivischen Darstellung;

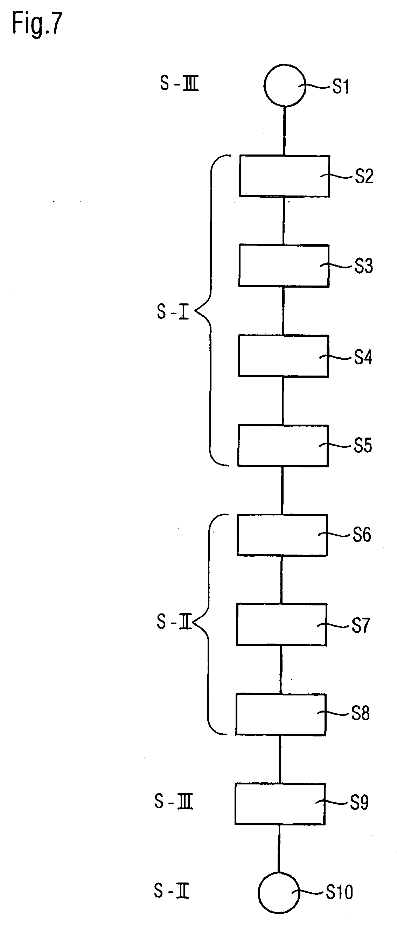

- Fig. 7: ein Ablaufschema für ein Verfahren einer bevorzugten Ausführungsform.

Fig. 1 zeigt eine Windenergieanlage 1000 mit einem Turm 1, einer Gondel 2 sowie einem Rotor 3 mit einer Anzahl von vorliegend drei Rotorblättern 3.1, 3.2, .3.3. Die Rotorblätter 3.1, 3.2, .3.3 sind am Rotorkopf 5 über einen Spinner 4 mit einer darin untergebrachten, in Fig. 2 näher gezeigten Rotornabe 9 an einen in Fig. 2 gezeigten Generator 7 antriebsgekoppelt. Dazu ist ein Rotorblatt 3.1, 3.2, 3.3 über ein in Fig. 2 dargestelltes Blattlager 8 mit einer Rotornabe 9 bzw. einem Nabenadapter verbunden, welche einen Generator-Rotor 7.1 des Generators 7 zur Erzeugung von elektrischem Strom in einem feststehenden Generatorstator 7.2 des Generators 7 antreibt. Fig. 2 zeigt die Details des Maschinenhauses in der Gondel 2 mit dem genannten Blattlager 8, der Rotornabe 9 sowie dem Generator 7 mit Generator-Rotor 7.1 und Generatorstator 7.2.

Bei drehendem Rotor 3 dreht sich ein Rotornabengehäuse 15 gegen ein Maschinenhausgehäuse 12, welches das Maschinenhaus der Gondel 2 umgibt. Die Rotornabe 9 und das Blattlager 8 greifen vorliegend in das Rotornabengehäuse 15 ein. Der Generator-Rotor 7.1 sitzt drehbargelagert auf einem Achszapfen 19 ebenso wie die Rotornabe 9 derart, dass eine Drehbewegung des Rotors 3 den Generator-Rotor drehend antreibt.

Eine Plattform 21 des Maschinenhauses 20 trägt eine Anzahl von Azimutmotoren 22 zur Betätigung eines Azimutlagers, um die Gondel 2 mit ihrer Achse A entsprechend einer Windrichtung auszurichten. Auf der Plattform 21 ist die Windenergieanlage lokal über ein Terminal 31 steuerbar und mittels dem Terminal 31 kann auf eine.schematisch in Fig. 2 gezeigte Regeleinrichtung 30 der Windenergieanlage zugegriffen werden - so können über das Terminal 31 Anweisungen und Parameter eingesteuert werden, mittels denen die Windenergieanlage 1000 betriebsbedingt heruntergefahren werden kann, z. B. für einen betriebsbedingten Servicefall. Ein erstes weiteres Terminal 31' im Turmfuß oder am Turmfuß kann beispielsweise an die Einrichtung zur Steuerung 30 angeschlossen sein und ein zweites weiteres Terminal 31" kann in einer Steuerzentrale vorgesehen sein und darüber an die Einrichtung zur Steuerung 30 angeschlossen sein.

Sollten im Servicefall Maßnahmen im Rotornabengehäuse 15 vorgenommen werden müssen --ggfs. auch für andere Maßnahmen an der Windenergieanlage-- ist es erforderlich, dass der Rotor 3 zum Stillstand gebracht wird und im Stillstand arretiert wird mit dem Ziel, eine Bewegung des Rotors weitgehend zu verhindern, insbesondere aber ein Wiederanlaufen der Windenergieanlage zu verhindern. Beispielsweise zeigt Fig. 6(A) eine stillstehende Windenergieanlage 1000A bei einer ersten Stillstandsposition P1 des Rotors 3 mit dem Rotorblatt 3.1 bei 12Uhr und Fig. 6(B) eine stillstehende Windenergieanlage 1000B während eines Serviceeinsatzes eines Servicepersonals P bei einer zweiten Stillstandsposition P2 des Rotors 3 mit dem Rotorblatt 3.1 bei 2Uhr.

Zur Vorbereitung des Serviceeinsatzes wird eine Windenergieanlage 1000, 1000A, 1000B bis zum Stillstand des Rotors 3 betriebsbedingt heruntergefahren, indem der Rotor 3 mechanisch und/oder aerodynamisch abgebremst wird. Ohne den Regelansatz des hier beschriebenen Konzepts müsste der Rotor 3 auf einer durch das Abbremsen sich mehr oder weniger abschätzbar ergebenden Ruheposition zum Stillstand gebracht werden. Sollte diese Ruheposition nicht mit einer für den Rotor arretierbaren Stillstandposition übereinstimmen, müsste der Rotor 3 von der ungeeigneten Ruheposition in eine arretierbare Stillstandposition überführt werden. Es gilt zu vermeiden, dass der Rotor 3 in der genannten ungeeigneten Ruheposition zum Stillstand kommt, denn dann bedarf es zusätzlichen Aufwands, um den Rotor von der ungeeigneten Ruheposition auf die arretierbare Stillstandposition zu überführen.

Es besteht auch die nachteilige Möglichkeit, den noch drehenden Rotor 3 mit einem nicht unerheblichen Restdrehmoment abrupt zu stoppen, indem er manuell direkt auf der arretierbaren Stillstandposition eingefangen würde; dies wird auch als dynamisches Einfangen bezeichnet. Ein dynamisches Einfangen erfolgt also dadurch, dass der noch drehende Rotor 3 erst durch eine Arretierung in der Stillstandposition zum Stillstand gebracht wird. Diese Vorgehensweise überträgt nicht unerhebliche Lasten- und Momente auf eine Feststellvorrichtung mittels der der Rotor 3 arretiert wird und kann die Feststellvorrichtung erheblich beschädigen; daher ist dies zu vermeiden und bevorzugt bereits aufgrund der technischen Gegebenheiten möglichst auszuschließen.

Zum Herunterfahren der Windenergieanlage bis zum Stillstand des Rotors kann eine aerodynamische Bremswirkung des Rotors 3 bei entsprechendem durch Pitchmotoren 61 einstellbaren Anstellwinkel der Rotorblätter 3.1, 3.2, 3.3 genutzt werden, die durch eine schematisiert symbolisch dargestellte aerodynamische Bremse 60 realisierbar ist.

Zusätzlich zu einer solchen aerodynamischen Bremse 60 kann im Betrieb des Rotors -- also bei drehendem Rotor 3-- eine mechanische Betriebsbremse genutzt werden. Eine mechanische Betriebsbremse kann bevorzugt an einem vom Rotor 3 angetriebenen drehenden Teil angreifen, wie beispielsweise (hier nicht der Fall und nicht dargestellt) direkt an einer drehenden Welle. Im Falle eines Antriebstrangs einer Windenergieanlage mit einem hier dargestellten feststehenden Achszapfen 19 kann die Betriebsbremse 40 grundsätzlich --hier bevorzugt dargestellt und im Folgenden anhand von Fig. 3 und Fig. 4 erläutert-- an einem Generator-Rotor angreifen; in einer Abwandlung (hier nicht der Fall und nicht dargestellt) ggfs. auch an anderen drehenden Teilen des Antriebsstranges wie z.B. der an einer Rotornabe 9 angreifen. Vorliegend ist ein erstes Bremsmittel der Betriebsbremse 40 an einem Generator-Stator 7.2 angebracht und wirkt auf ein zweites Bremsmittel am Generator-Rotor 7.1; die Betriebsbremse 40 wirkt also zwischen einem Generator-Stator 7.2 und einem Generator-Rotor 7.1 und ist insofern zwischen dem Generator-Stator 7.2 und dem Generator-Rotor 7.1 angebracht.

In einer Abwandlung könnte eine Betriebsbremse an einem Lager auf dem Achszapfen 19, insbesondere an einem Lager zwischen dem Generator-Rotor 7.1 und dem Achszapfen 19 angreifen (hier nicht der Fall und nicht dargestellt).

Eine weitere hier beispielhaft gezeigte mechanische Betriebsbremse 40 kann zusätzlich oder alternativ zwischen einem drehenden Teil der Gondel 2 und einem stehenden Teil der Gondel 2 vorgesehen sein, z.B. zwischen dem genannten Rotornabengehäuse 15 und dem Maschinenhausgehäuse 12.

Zusätzlich oder alternativ zu wenigstens einer der mechanischen Betriebsbremsen 40, 40', die in Fig. 2 schematisch und beispielhaft eingezeichnet sind, weist die Windenergieanlage 1000 in der Gondel 2 eine mechanische Arretierung bzw. Arrtierbremse aufauch als Parkbremse bezeichnet-- welche Arretierung mittels einer mechanischen Feststellvorrichtung ausgebildet ist, den Rotor 3 im Stillstand zu arretieren. Diese Feststellvorrichtung 50 ist schematisch beispielhaft in Fig. 3 und Fig. 4 --als Arretierbremse-- in Kombination mit einer mechanischen Betriebsbremse 40, 40' näher gezeigt; nämlich hier mit einer mechanischen Betriebsbremse 40 zwischen dem Generator-Stator 7.2 und dem Generator-Rotor 7.1 (in einer Abwandlung und/oder mit einer mechanischen Betriebsbremse 40' zwischen dem Maschinenhausgehäuse 12 und dem Rotornabengehäuse 15).

Im Folgenden wird die Feststellvorrichtung 50, insbesondere mit einer mechanischen Betriebsbremse 40 zwischen dem Generator-Stator 7.2 und dem Generator-Rotor 7:1 in Bezug auf Fig. 3 und Fig. 4 näher erläutert. Die Arretierung, mit oder ohne mechanischer Betriebsbremse 40, kann grundsätzlich auf unterschiedliche Art und Weise realisiert werden, beispielsweise durch Reibschluss und/oder Formschluss; ein Beispiel eines Formschlusses zur Darstellung einer Arretierung ist in Fig. 5 gezeigt.

Allgemein können weiter zur Darstellung eines Reibschlusses Bremsbacken --angebracht an einem stehenden Teil der Windenergieanlage 1000-- an eine Bremsscheibe -- angebracht an einem stehenden Teil der Windenergieanlage 1000-- angreifen, um das drehende Teil der Windenergieanlage zu halten bzw. zu arretieren. Ähnlich können Bremsbacken eines stehenden Teils der Windenergieanlage 1000, die an eine Bremsscheibe eines drehenden Teils einer Windenergieanlage angreifen, für eine mechanische Betriebsbremse genutzt werden. Insbesondere kann vorliegend eine mechanische Betriebsbremse 40 in Kombination mit einer Arretierung realisiert sein. Vorliegend wird die mechanische Betriebsbremse 40 in einer erweiterten Funktionalität bei weiter erhöhtem Bremsbackendruck als erstes Teil einer Arretierung genutzt.

Die ggfs. auch allein, d.h. auch ohne vorgenannte mechanische Betriebsbremse 40, realisierte Arretierung wird im Folgenden anhand der Feststellvorrichtung 50 von Fig. 3 und Fig. 4 beschrieben - eine alternative Anordnung einer Betriebsbremse 40' für eine abgewandelte Feststellvorrichtung 50' ist als Detail X in Fig. 6(A) und Fig. 6(B) schematisch gezeigt.

Im Folgenden wird für identische oder ähnliche Merkmale oder Merkmale identischer oder ähnlicher Funktion der Einfachheit halber das gleiche Bezugszeichen verwendet; im Bezug auf Fig. 3 und Fig. 4 wird vor allem die Feststellvorrichtung 50 beschrieben, wobei betreffend die übrigen Merkmale auf die vorgehende Beschreibung verwiesen ist.

Aus Fig. 3 ist der nähere Aufbau eines Systems 100 aus Rotor 3 und Generator 7 zur Ausbildung eines Antriebstranges erkennbar. Der Rotor 3 ist über die Rotornabe 9 genauso wie der Generator 7 über den Generator-Rotor 7.1 auf einem Achszapfen 19 drehbar gelagert, wobei die Drehbewegung des Rotors 3 in eine Drehbewegung des Generator-Rotors 7.1 umsetzbar ist. Der sich im Generator-Stator 7.2 drehende Generator-Rotor 7.1 generiert dabei elektrischen Strom gemäß der Auslegung des Generators 7. Der Generator-Rotor weist entsprechend umfänglich angeordnete Pole 7P und der Generator-Stator 7.2 eine geeignete Statorwicklung 7S auf.

Der Generator-Stator 7.2 ist von einer Anzahl von Stator-Tragarmen 17 gehalten, die an einem Stator-Stern 18 befestigt sind. Der Achszapfen 19 und der Stator-Stern werden vom Maschinenträger 24 auf einem Azimutlager 23 im Maschinenhaus 20 getragen.

Zur Darstellung der Feststellvorrichtung 50 weist der Generator-Rotor 7.1 am Rande einer Tragkonstruktion 17P einen Feststellsteg 16 mit einer Anzahl von Feststellnuten 16N und einer Reibfläche 16S auf. Es sei angemerkt, dass ein solcher nicht näher bezeichneter Feststellsteg auch an einem Rand eines Rotornabengehäuses gebildet sein kann. Der Feststellsteg 16 wirkt vorliegend zusammen mit einem Feststellmittel 14 zur Darstellung einer vorgenannten Feststellvorrichtung 50 (bzw. in einer Abwandlung zur Darstellung einer Feststellvorrichtung 50' zwischen Maschinenhausgehäuse 12 und Rotornabengehäuse 15). Die Feststellvorrichtung 50 (bzw. Feststellvorrichtung 50') ist allgemein in Fig. 5 erläutert.

Fig. 4 zeigt vergrößert die mechanische Betriebsbremse 40 zur Darstellung der Feststellvorrichtung 50 mit dem Feststellsteg 16 bzw. den Feststellnuten 16N und der Reibfläche 16S in perspektiver und vergrößerter Darstellung zwischen Generator-Rotor 7.1 und Generator-Stator 7.2 des Generators 7. Insbesondere ist in Fig. 4 bereits mit Hinweis auf Fig. 5 als Teil einer Betriebsbremse mit Arretierfunktion ein Träger für einen Arretierbolzen 51 erkennbar, welcher zum Eingreifen in eine allgemein mit 52 bezeichnete Arretiernut 52 (hier die Feststellnut 16N) vorgesehen ist.

Allgemein kann zur Darstellung eines Formschlusses beispielsweise ein Arretierbolzen 51 in eine Arretiernut 52 eines drehenden Teils der Winderiergieanlage 1000 eingreifen, um das drehende Teil der Windenergieanlage zu halten. Damit kann ein zweites Teil einer Arretierung gebildet sein.

Bei einer vorliegenden in Fig. 5 gezeigten Ausführungsform ist eine mechanische Betriebsbremse 40 als Teil einer mechanischen Feststellvorrichtung 50 mit Arretiermitteln in einer Scheibenbremse integriert. Ein Feststellsteg 16 in Form einer Bremsscheibe 42 ist an einem drehenden Teil der Windenergieanlage --vorliegend an dem Generator-Rotor 7.1-- gebildet. Ein Bremsmittel --hier eine Bremsbacke 41 und ein Arretierbolzen 51-sind an einem feststehenden Teil der Windenergieanlage -- hier an dem Generator-Stator 7.2-- angebracht. In einer Abwandlung kann ein Feststellsteg auch am Rotornabengehäuse 15 und ein Bremsmittel am Maschinengehäuse 12 gebildet sein.

Die Bremsbacke 41 ist zum Zustellen an die Bremsscheibe 42 ausgebildet und ist zunächst Teil einer mechanischen Betriebsbremse 40. Bei Stillstand des Rotors 3 und erhöhtem Bremsbackenanpressdruck dient die Bremsbacke 41 in Kombination mit der Bremsscheibe 42 als erstes Teil einer mechanischen Feststellvorrichtung 50 mittels welcher der Rotor 3 feststellbar ist. Zusätzlich weist die Bremsscheibe 42 eine Anzahl von vorgenannten Nuten 16N als Arretiernuten 52 auf, die einer Anzahl von in die Arretiernuten 52 eingreiffähigen Arretierbolzen 51 zugeordnet sind. Die Kombination von Arretierbolzen 51 und Arretiernuten 52 als zweites Teil der mechanischen Feststellvorrichtung 50 bildet eine echte Arretierung, die --einmal zugestellt-- den Rotor 3 sicher und unabhängig von äußeren Umständen (wie Windgeschwindigkeit oder Netzverfügbarkeit) stillsetzt und die Gefahr einer Bewegung, gar eines Wiederanlaufs, vermeidet.

Dabei ergibt sich grundsätzlich das oben allgemein beschriebene Problem, dass insbesondere bei einer durch Formschluss realisierten Parkbremse oder dergleichen Arretiervorrichtung --wie bei dem beschriebenen zweiten Teil der mechanischen Feststellvorrichtung 50-- nur bestimmte Stillstandpositionen z. B. P1, P2 der Fig. 6 des Rotors 3 für eine Arretierposition in Frage kommen, da nur in einer Arretierposition ein Arretierbolzen 51 in eine Arretiernut 52 passt. Überlicherweise wird dazu von einem in Fig. 6 (B) gezeigten Servicepersonal P eine Restdrehzahl des Rotors 3 abgeschätzt. Unter Berücksichtigung einer erforderlichen Zufahrtzeit einer Betriebsbremse 40, 40' -z. B. aufgrund einer elektromechanischen oder hydraulischen Zustellvorrichtung-- als auch unter Berücksichtigung einer Verzögerung der mechanischen Betriebsbremse 40, 40' wird versucht, den Rotor 3 so zu positionieren, dass eine Arretiernut 52 in der Bremsscheibe 42 genau vor dem Arretierbolzen 51 zum Stillstand kommt. Nur in solch einem Fall könnte dann die Arretierung --also hier der zweite Teil der Feststellvorrichtung 40-arretiert werden, insbesondere ein Arretierbolzen 51 in eine Arretiernut 52 eingebolzt werden.

Fig. 2 zeigt zur Behebung der beschriebenen Problematik am Beispiel der Windenergieanlage 1000 eine Regeleinrichtung 30, die über ein oder mehrere Bedienungsterminals 31, 31', 31" bedienbar ist und die steuerverbunden ist mit funktionat unterschiedlichen Bremsen. Diese Bremsen umfassen:
- wenigstens eine der Betriebsbremsen 40, 40', von denen jede allein oder beide in Kombination vorgesehen sein können;
- die aerodynamische Bremse 60, die über eine Anzahl von auf einen Pitchwinkel der Rotorblätter 3.1, 3.2, 3.3 wirkenden Pitchmotoren 61 einstellbar ist;
- eine am Generator 7 gebildete elektro-magnetische Bremse 70, die unter Erregung des Generators 7 , insbesondere Generator-Rotors 7.1 regelbar ist;
- eine Arretierung als Teil der mechanischen Feststellvorrichtung 50, die vorliegend mittels einer Anzahl von Arretierbolzen 51 und Arretiernuten 52 zwischen einem Rotornabengehäuse 15 und dem Maschinenhausgehäuse 12 der Gondel 2 realisiert ist.

Die Bremsen 40, 40', 50 sowie 60 und 70 sind mit der Regeleinrichtung 30 steuerverbunden. An das als Rotor-Generator-Anlage bezeichnete System 100 aus Gondel 2, Generator 7 und Rotor 3 ist vorliegend ein Bremssystem 200 angeschlossen, nämlich mit einer oder mit mehreren der Bremsen 40, 40', 50, 60 und/oder 70, das mit einem in der Steuereinrichtung 30 realisierten Bremsmodul 210 über Schnittstellen 240, 250, 260, 270 zur Ansteuerung der Bremse oder der Bremsen steuerverbunden ist; d.h. zur regelnden Steuerung der elektrisch und/oder hydraulisch zustellbaren mechanischen Betriebsbremse 40, zur automatischen Zustellung der Arretierung mittels der mechanischen Feststellvorrichtung 50, zur Ansteuerung der aerodynamischen Bremse 60 und zur Ansteuerung der elektro-magnetischen Bremse 70. Das Bremsmodul 210 kann bedient werden über geeignete gestrichelt dargestellte Steuerleitungen, die über Terminals 31, 31', 31" bedienbar sind. An die Regeleinrichtung 30 ist ein Taster und/oder ein Monitor als Eingabeterminal angeschlossen, was die Eingabe einer gewünschten Endposition des Rotors 3 erlaubt.

Das Bremsmodul 210 erhält Messwerte zu Regelgrößen aus einem Sensorsystem 230, das mindestens einen Windgeschwindigkeitssensor Sv, einen Drehzahlsensor Sn und einen Verzögerungssensor Sa aufweist. Das Bremsmodul 210 kann kalibriert werden über ein Kalibriermodul 220.

Das Bremssystem 200 erlaubt es im Prinzip, das System 100 aus Rotor 3 und Generator 7 an/in der Gondel 2 der Windenergieanlage 1000, d. h. den Rotor 3 und den Generator 7 automatisiert und im Betrieb zu bremsen und bis auf einen Stillstand positionsgenau auf die Endposition herunter zu bremsen mittels einer oder mehreren der geregelten Bremsen 40, 40' sowie 60 und 70 und über die Arretierung als Teil der mechanischen Feststellvorrichtung 50 (in einer Abwandlung zusätzlich oder alternativ der Feststellvorrichtung 50') im Stillstand praktisch bei der gewünschten Endposition zu arretieren.

Fig. 6 zeigt in Ansicht A und B jeweils eine Windenergieanlage 1000A, 1000B älterer bzw. neuerer Bauart im Bereich der Gondel 2. Vorliegend sind für identische oder ähnliche Teile oder Teile identischer oder ähnlicher Funktion gleiche Bezugszeichen verwendet. Das Detail X in der Ansicht (A) und (B) ist in Fig. 5 zur detaillierten Darstellung einer mechanischen Betriebsbremse 40', in Kombination mit einer mechanischen Arretiervorrichtung als mechanische Feststellvorrichtung 50', gezeigt.

Der feststehende Teil der Windenergieanlage 1000A, 1000B kann durch ein Maschinenhausgehäuse 12 gebildet sein. Das als Teil des Rotors 3 bewegliche, also drehende, Teil der Windenergieanlage kann das Rotornabengehäuse 15 des Rotors 3 sein.

In der bevorzugten Ausführungsform gemäß Fig. 2, Fig. 3, Fig. 4 ist der feststehende Teil der Windenergieanlage 1000 vorliegend durch einen Generator-Stator 7.2, nämlich konkret einem Tragarm des Generator-Stators 7.2 gebildet. Das vom Rotor 3 angetriebene bewegliche, also drehende, Teil der Windenergieanlage ist vorliegend der Generator-Rotor 7.1 des Generators 7.

Der Arretierbolzen 51 bildet mit der Arretiernut 52 die Arretierungsvorrichtung in Form des zweiten Teils der mechanischen Feststellvorrichtung 50. Der Arretierbolzen 51 ist über eine Motorik 53 --beispielsweise ein Elektromotor oder eine Hydraulik oder eine Pneumatik oder einen magnetischen Aktuator-- in Radialrichtung R zur Arrtiernut 52 zustellbar und bei geeigneter relativ Positionierung entlang des Umfangs U --d. h. bei übereinstimmender Winkelposition einer Arretiernut 52 und Arrtierbolzen 51-- kann unter Aktivieren der Motorik 53 der Arretierbolzen 51 in die Arretiernut 52 gefahren werden. Die Motorik 53 kann gegebenenfalls auch derart ausgebildet sein, dass diese bereits entlang des Radius R zustellt, wenn der Arretierbolzen 51 nur teilweise an der Winkelposition der Arretiernut 52 sitzt. Die Arretiernut 52 weist Öffnungsflanken 52.1, 52.2 auf, die den Arretierbolzen 51 trichterförmig aufnehmen können, so dass dieser selbstjustierend in die Arretiernut 52 einfahren kann. Entsprechend weist der Arretierbolzen 51 eine im wesentlichen kegelig sich verjüngende Außenoberfläche 51.1 auf, die eine im wesentlichen betragsmäßig gleiche oder etwas steilere Steigung wie die Flanken 52.1, 52.2 der Arretiernut 52 hat.

Die mechanische Betriebsbremse 40 ist in Form einer Scheibenbremse gebildet; weist also eine Funktionalität auf, die sich durch das Zusammenspiel von Bremsbacken 41 und Bremsscheibe 42 ergibt. Die lediglich symbolisch dargestellten Bremsbacken 41 können auch im Betrieb einer Windenergieanlage 1000, d. h. bei drehendem Rotor 3 bzw. drehendem Rotorgehäuse 15 --in Reibschluss-- Reibung auf die Bremsscheibe 42 ausüben.

Insbesondere in Kombination mit der aerodynamischen Bremse 60 bietet dies unterstützend eine sehr effektive Möglichkeit den Rotor 3, auch in Notsituationen, schnell zum Stillstand zu bringen. Üblicherweise reicht die aerodynamischen Bremse 60 aus, um bei einem normalen Herunterfahren der Windenergieanlage den Rotor bis zu einer Trudelbewegung herunterzubremsen und anschließend die mechanische Betriebsbremse 40 zu nutzen, um den Rotor 3 zum Stilstand zu bringen. Das Einschalten der mechanischen Betriebsbremse 40 bei noch drehendem Rotor 3, insbesondere in einem Notfall bei noch z.B. im Lastbereich drehenden Rotor 3, erhöht die mechanische Betriebsbremse 40 das Lastmoment auf den Rotor 3, d. h. die Verzögerung desselben, ganz erheblich. Im Ernstfall stellt die mechanische Betriebsbremse 40 auch bei fehlender Netzlast ein sicheres Mittel dar, den Rotor 3 zum Stillstand zu bringen.

Es hat sich gezeigt, dass zusätzlich --aber gegebenenfalls nicht in jedem Fall, insbesondere nicht z. B. bei fehlender Netzlast-- eine elektro-magnetische Bremse 70 nutzbar ist, um eine automatische Positionierung des Rotors 3 derart zum stehenden Teil der Gondel 2 vorzunehmen, dass Arretierbolzen 51 und Arretiernuten 52 übereinstimmen in der Winkelposition. Es hat sich gezeigt, dass das gesteuerte Abbremsen des Rotors 3 bis zum Stillstand unter Steuerung der Erregung vergleichsweise einfach möglich ist. Im Ergebnis können damit als Bremse eingesetzt werden, eine aerodynamische Bremse 60 und die mechanische Betriebsbremse 40 (auch Haltebremse genannt) und gegebenenfalls bei vorhandener Netzversorgung auch eine elektro-magnetische Bremse 70.

Das besonders bevorzugte Verfahren zum automatisierten Abbremsen des Rotors 3 sieht in einem ersten grundsätzlichen Verfahrensteil S-I das automatisierte Abbremsen mittels der aerodynamischen Bremse 60 vor, besonders bevorzugt unter Nutzung der Erregung des Generator-Rotors 7.1, also einer elektro-magnetischen Bremse 70. Wenn kein Notfall vorliegt kann unterhalb einer gewissen Schwelldrehzahl des Rotors, z.B. wenn dieser nur noch trudelt oder nur sehr langsam dreht, eine mechanische Bremse 40 zusätzlich die Restdrehbewegung des Rotors verzögern. Anschließend erfolgt in einem zweiten grundsätzlichen Verfahrensteil S-II eine automatische Positionierung des Rotors 3 zum stehenden Teil der Gondel 2, insbesondere derart, dass eine Arretiernut 52 praktisch gegenüber einem Arretierbolzen 51 zum stehen kommt; jedenfalls aber an ungefähr der gleichen Winkelposition zum stehen kommt. Es hat sich gezeigt, dass ein Rastmoment des Generators 7 vorteilhaft bei der Positionierung genutzt werden kann, um den Rotor 3 innerhalb einer Rasteinheit stillzusetzen. Es hat sich gezeigt, dass das Abbremsen des Rotors 7 bis zum Stillstand unter Steuerung/Regelung der Erregung des Generator-Rotors und/oder unter Steuerung/Regelung der mechanischen Betriebsbremse 40 erfolgen kann; und zwar derart dass mit einer Restbewegung eine exakte Positionierung im Stillstand zur Folge hat, die eine Arretierung in einem dritten grundsätzlichen Verfahrensteil S-III möglich macht.

In dem dritten grundsätzlichen Verfahrensteil S-III erfolgt ein automatisches oder manuelles --hier automatisches-- Einbolzen durch Einführen eines automatischen Arretierbolzens 51 in eine Arretiernut 52, wie dies in Fig. 5 allgemein erläutert ist. Zusätze lich kann die mechanische Betriebsbremse mit einem größeren Anpressdruck der Bremsbacken 41 auf die Bremsscheibe 42 als Haltebremse in Reibschluss den ersten Teil der mechanischen Feststellvorrichtung 40 bilden; d.h. zusätzlich zum Arretieren des drehenden Teils der Windenergieanlage (hier Generator-Rotor 7.1 und/oder in einer Abwandlung Rotornabengehäuse 15) durch eine Arretierung des zweiten Teils der mechanischen Feststellvorrichtung 50.

Die Kombination einer Arretierung im Rahmen der mechanischen Feststellvorrichtung 50 als auch einer Haltebremse bzw. Betriebsbremse 40 mechanischer Art hat sich besonders bewährt im Rahmen einer vorliegend gezeigten Scheibenbremse. Dazu weist eine Bremsscheibe 42 der Scheibenbremse nicht nur eine Bremsoberfläche (z. B. vorgenannte Reibflächen 16S) auf, welche durch Bremsbacken 41 in Reibschluss gegriffen werden kann, sondern darüberhinaus eine Anzahl von Arretiernuten 52 (z. B. vorgenannte Nuten 16N) in die ein bzw. eine Anzahl von Arretierbolzen 51 eingreifen können. Unter einer Anzahl ist grundsätzlich eins oder mehr, also eins, zwei, drei usw. zu verstehen.

Fig. 7 zeigt in einem Ablaufschema einen bevorzugten Verfahrensablauf zum automatischen und geregelten Abbremsen sowie Sichern eines Rotors 3 bei einer zuvor erläuterten Windenergieanlage 1000, 1000A, 1000B. Eine Arretierung ist grundsätzlich möglich und automatisch realisiert; bei verringerter Servicezeit wird verlässlich ein Wiederanlaufen der Windenergieanlage verhindert.

Das Verfahren folgt dem grundsätzlichen Aufbau mit Abbremsen des Rotors 3 in einem ersten Verfahrensteil S-I, Positionieren des Rotors 3 auf eine Stillstandposition in einem zweiten Verfahrensteil S-II und Arretieren des Rotors 3 in der Stillstandposition P1, P2 in einem dritten Verfahrensteil S-III. Konkret ist vorliegend vorgesehen, dass im ersten Verfahrensteil S-I ein automatisiertes Abbremsen mittels einer aerodynamischen Bremse 60 (mit Hilfe des Pitch-Winkels der Rotorblätter 3.1, 3.2, 3.3) vorzugsweise in Kombination mit Bremsen durch Erregung des Rotors über eine elektromagnetische Bremse 70 vorgenommen wird. Konkret ist vorliegend vorgesehen, dass im zweiten Verfahrensteil S-II eine automatische Positionierung des Rotors zum stehenden Teil der Gondel (z.B. Positionierung der der Arretierungsnuten zu den Arretierungsbolzen), insbesondere unter Zuhilfenahme des Rastmomentes des Generators 7, sowie gesteuertem Abbremsen des Rotors 3 bis zum Stillstand (Steuerung der Erregung über eine elektromagnetische Bremse 70 und Steuerung der Haltebremse in Form der mechanischen Betriebsbremse 40, 40') vorgenommen wird. Konkret ist vorliegend vorgesehen, dass im dritten Verfahrensteil S-III ein automatisches oder manuelles Einbolzen mit Hilfe der mechanischen Feststellvorrichtung 50 (z.B. Einführen der Arretierungsbolzen in die Arretierungsnuten = Formschluss) oder Arretieren durch die Haltebremse (Reibschluss) erfolgt; dies mit dem Ziel ein Wiederanlaufen des Rotors verlässlich zu verhindern.

In einem ersten Schritt S1 wird die Windenergieanlage in den Servicestatus gesetzt. In einem zweiten S2 erfolgt über einen Taster, Tastatur oder Display und sonstiges ManMachine-Interface (MMI) zum Einbolzen/Arretieren der Anlage eine Auswahl der benötigten Endposition, also der Halteposition. Diese kann beispielsweise unter Berücksichtigung der Relativorientierung des Generator-Rotors 7.1 zum Generatorstator 7.2 als Stillstandposition angegeben werden. So ist beispielsweise eine Position zwischen 0 und 360° für ein bestimmtes Rotorblatt, beispielsweise für das Rotorblatt 3.1, als Endposition auswählbar, z. B. Rotorblatt 3.1 auf 12 Uhr-Position, und dann einer über die Relativorientierung des Generator-Rotors 7.1 zum Generatorstator 7.2 gerasterten Stillstandposition zuzuordnen.

In einem dritten Schritt S3 kann eine aerodynamische Bremse 60 dadurch betätigt werden, dass die Pitchmotoren 61 betrieben werden, um die Rotorblätter 3.1, 3.2, 3.3 des Rotors 3 aus dem Wind zu drehen. Der Rotor 3 trudelt aus; in Folge von Turbulenzen und Wirbelablösungen erfolgt eine Verzögerung des Rotors mittels der aerodynamischen Bremse 60.

In einem vierten Schritt S4 kann die Drehzahl und die Verzögerung der Anlage ermittelt werden.

In einem fünften Schritt S5 wird zur Erhöhung der Verzögerung eine zusätzliche Erregung auf die Polschuhe des Rotors 3 gegeben; insbesondere mittels der elektromagnetischen Bremse 70. Die Erregung wird in Abhängigkeit der vorhandenen Drehzahl n und der vorhandenen Verzögerung a automatisch gewählt. Auf diese Weise kann ein geregeltes, jedenfalls aber ein gesteuertes, Abbremsen des Rotors 3 bewirkt werden. Die Regelung einer Erregung kann sich als schneller und genauer erweisen, als die Regelung der mechanischen Betriebsbremse 40.

Die Schritte S2 bis S5 entsprechen im Wesentlichen dem automatisierten Abbremsen im ersten Verfahrensteil S-I. Die Schritte S6 bis S8 und S10 entsprechen im Wesentlichen dem automatisierten Positionieren im zweiten Verfahrensteil S-II. Die Schritte S1 und S9 entsprechen im Wesentlichen dem automatisierten Arretieren im dritten Verfahrensteil S-III.

In einem sechsten Schritt S6 kann eine Software oder dergleichen Computerprogrammprodukt zur Verfügung gestellt werden, das selbstständig berechnet, bei welcher Drehzahl n und Position S die mechanische Bremse 40 zugefahren wird. Dies kann bewirkt werden durch ein zeitgleiches Bremsen mittels der elektromagnetischen Bremse 70, beispielsweise durch Erregung des Generators, insbesondere Generator-Rotors 7.1. Dadurch wird in geregelter Weise der Rotor 3 derart zum Stillstand gebracht, dass die gemäß der voreingestellten Endposition angefahrene Stillstandposition einer anlagenfest vorgegebenen Arretierposition deckungsgleich zugeordnet ist, insbesondere bei einer unter Formschluss automatisch zugestellten Feststellvorrichtung. In erleichternder Weise ist durch eine Arretierpositionsverteilung auf eine Arretiernuten- und/oder Pol-Verteilung derart abgestimmt, dass eine Arretierposition der Arretierpositionsverteilung mit einer durch ein Rastmoment bedingten Raststellung des Generator-Rotors übereinstimmt. Die letzte Positionierung kann also durch ein Rastmoment des Generators 7 bewirkt werden. Beim Beispiel der Fig. 5 kommt ein Arretierungsbolzen 51 in der Stillstandsposition gegenüber einer Arretierungsnut 52 zu stehen infolge des Regelverfahrens.

Insbesondere können dazu in einem siebten Schritt S7 zur Berechnung der nötigen Verzögerungswerte des Bremssystems 200 über den Inkrementalgeber --allgemein einem Sensor Sn, Sa des Sensorsystems 230-- im Vorfeld bei einer Testbremsung ermittelt und bei den Folgenden Bremsungen korrigiert bzw. optimiert werden. Dadurch kann eine Kalibrierung bzw. im Laufenden Betrieb selbstständige Anpassungen des Verzögerungswerte der mechanischen Bremse 40 und/oder der elektro-magnetischen Bremse 70 erreicht werden, beispielsweise in einem Kalibriermodul 220 der Regeleinrichtung 30; dies auch im Hinblick auf den akuten Zustand einer Bremse des Bremssystems 200 und gegebenenfalls auch in Abhängigkeit einer Außentemperatur oder einer Windgeschwindigkeit (gemessen durch Sensor Sv) der Windenergieanlage 1000.

In einem achten Schritt S8 kommt der Rotor 3 dann selbstständig zur Ruhe und zwar an derjenigen Stillstandposition, die der im Schritt S2 definierten Endposition zugeordnet ist, wobei in der Stillstandsposition nicht nur per Reibschluss eine Haltebremse aktiviert werden kann (etwa durch reibschlüssiges Schließen der Bremsbacken 41 an der Bremsscheibe 42) sondern auch eine Arretierung (etwa durch formschlüssiges Zustellen wenigstens eines Arretierbolzen 51 in eine Arretiernut 52).

In einem neunten Schritt S9 kann manuell oder automatisch ein Einbolzen oder anderweitiges Arretieren des drehenden Teils gegen das nichtdrehende Teil --hier das Rotornabengehäuse 15 gegen das Maschinenhausgehäuse 12-- vorgenommen werden mittels der mechanischen Feststellvorrichtung 40 in Form der Arretierungsvorrichtung, wie diese beispielhaft in Fig. 5C gezeigt ist. Das Arretieren erweist sich als unproblematisch, da ein Arretierungsbolzen 51 in der Stillstandsposition gegenüber einer Arretierungsnut 52 zu stehen gekommen ist, infolge des Regelverfahrens.

Sollte jedoch aus betrieblichen Gründen das Regelverfahren im Schritt S10 zu unterbrechen sein und eine eingenommene Stillstandsposition im Schritt S9 nicht arretierbar gewesen sein, kann der Verfahrensteil S-II und S-III zur Positionierung und Arretierung des Rotors 3 wiederholt werden bzw. es können ein oder mehrere Blätter 3.1, 3.2, 3.3 zeitweise in den Wind gepitcht werden, um die Drehzahl n wieder zu erhöhen und schließlich zu einer arretierbaren Stillstandsposition zu gelangen. vorteilhaft an dem Verfahren ist die Verlässlichkeit im Rahmen der Regelschleife, sodass dieses automatisch wiederholbar ist ohne Gefährdung des Servicepersonals P.

Insbesondere kann durch die Nutzung der Erregung zusätzlich eine Verzögerung der mechanischen Betriebsbremse 40 und/oder der aerodynamischen Bremse 60 erreicht werden, dass die Verzögerung des Rotors 3 deutlich genauer regelbar wird. Denn die elektromechanische Bremse 40 als Betriebsbremse kennt im Grunde nur zwei Zustände - -geschlossen oder offen -- während eine Erregung kontinuierlich oder stufenweise z.B. in einer Rampe od. dgl. anpassbar ist, beispielsweise auf 30% oder einen anderen angepassten Wert einer Maximalerregung gesetzt werden kann. Somit ermöglicht ein Regelkreis mit der Regeleinrichtung 30 und dem Sensorsystem 230 und Bremssystem 200 (mechanische Bremse 40 und/oder elektro-magnetische Bremse 70 und/oder aerodynamische Bremse 60) eine punktgenaue Positionierung des Rotors 3 im Stillstand auf eine arretierbare Stillstandsposition und anschließend eine automatische problemlose Arretierung desselben in der Stillstandsposition.

### Bezugszeichenliste:

- 1: Turm
- 2: Gondel
- 3: Rotor
- 3.1, 3.2, 3.3: Rotorblätter
- 4: Spinner
- 5: Rotorkopf
- 7: Generatoren
- 7.1: Generator-Rotor
- 7.2: Generator-Stator
- 7P: Pole
- 7S: Statorwicklung
- 8: Blattlager
- 9: Rotornabe
- 12: Maschinenhausgehäuse
- 14: Feststellmittel
- 15: Rotornabengehäuse
- 16: Feststellsteg
- 16N, 16S: Nuten, Reibfläche
- 17S, 17P: Statortragarm, Tragkonstruktion
- 18: Statorstern
- 19: Achszapfen
- 20: Maschinenhaus
- 21: Plattform
- 22: Azimutmotoren
- 23: Azimutlager
- 24: Maschinenträger
- 30: Sensor
- 30: Regeleinrichtung
- 31, 31', 31": Terminal
- 40, 40': Betriebsbremse, insbesondere Scheibenbremse
- 41: Bremsbacke
- 42: Bremsscheibe
- 45: aerodynamische Bremse
- 50: Feststellvorrichtung, Betriebsbremse mit Arretierung
- 51: Arretierbolzen
- 51.1: Außenoberfläche
- 52: Arretiernut
- 52.1,52.2: Öffnungsflanken
- 53: Motorik
- 60: aerodynamische Bremse
- 61: Pitchmotor
- 70: elektrische Bremse
- 100: System aus Rotor 3, Generator 7 und Gondel 2
- 200: Bremssystem
- 210: Bremsmodul
- 220: Kalibriermodul
- 230: Sensorsystem
- 240, 250, 260, 270: Schnittstellen
- 1000, 1000A, 1000B: Windenergieanlage

- A: Achse
- a: Verzögerung
- n: Rotordrehzahl
- P: Servicepersonal
- P1, P2: Stillstandsposition
- R: Radialrichtung
- r: Radius
- S: Position
- Sv, Sn, Sa: Sensoren zur Messung der Windgeschwindigkeit v, Verzögerung a, Rotordrehzahl n
- S-I, S-II, S-III: Verfahrensteile
- U: Umfang
- S1 - S10: Verfahrensschritte 1 bis 10

## Patentansprüche

1. Verfahren zum Betreiben einer Windenergieanlage (1000), bei welchem in einem Servicefall oder dergleichen Fall eines betriebsbedingten Herunterfahrens der Windenergieanlage-- der Rotor (3) zum Stillstand gebracht und festgestellt wird, aufweisend die Schritte:
- Abbremsen des Rotors (3),
- Positionieren des Rotors (3) auf eine Stillstandposition,
- Feststellen des Rotors (3) in der Stillstandposition (P1, P2),
- wobei ferner
- eine Endposition vorgegeben wird (S2)
- der Rotor (3) geregelt auf eine der Endposition zugeordnete Stillstandposition abgebremst wird (S-I), und
- zum Positionieren (S-II) für die vorgegebene Endposition der Rotor automatisiert bis zum Stillstand auf der Stillstandposition abgebremst wird, wobei
- zum Feststellen (S-III) und/oder Arretieren in der Stillstandposition eine mechanische Feststellvorrichtung zugestellt wird, **dadurch gekennzeichnet, dass** die Stillstandposition unter Nutzung eines Rastmoments des Generators als Raster für ein Feststellen und/oder eine Arretierung eingestellt wird (S6), wobei eine Endposition des Rotors vorgegeben wird, indem eine Winkelstellung des Rotors vorgegeben wird und die Winkelstellung einer Rastposition des Generators zugeordnet wird.

2. Verfahren nach Anspruch 1 dadurch gekenntzeichnet, dass
- beim Feststellen ein Generator-Rotor (7.1) an einem Generator-Stator (7.2) festgestellt wird, und/oder
- beim Feststellen ein Rotornabengehäuse (15) an einem Maschinenhausgehäuse (12) festgestellt wird, und/oder
- beim Feststellen eine Rotornabe (9) und/oder ein Lager für einen Generator-Rotor (7.1) festgestellt wird, wobei
- das Feststellen mittels Arretieren formschlüssig erfolgt, und/oder
- das Feststellen mittels einer mechanischen Bremswirkung reibschlüssig erfolgt.

3. Verfahren nach Ansprüche 1 oder 2 **dadurch gekennzeichnet, dass** zum Abbremsen (S-I)
- eine mechanische Bremswirkung geregelt zugestellt wird (S6, S8), und/oder
- eine aerodynamische Bremswirkung geregelt erzeugt wird (S3), und/oder
- eine Erregung des Generators unter Erzeugung einer Bremswirkung geregelt wird (S5),
wobei die Bremswirkung über eine durch Stromerzeugung oder sonstige Last verursachte Verzögerung hinausgeht.

4. Verfahren nach einem der vorhergehenden Ansprüche **dadurch gekennzeichnet, dass** wenigstens eine Drehzahl und/oder eine Verzögerung des Rotors beim Abbremsen (S-I) gemessen wird (S4) und zur Regelung des Abbremsens (S-II) genutzt wird.

5. Verfahren nach einem der Ansprüche 1 bis 4 **dadurch gekennzeichnet, dass** eine kontinuierliche Winkelstellskala einer Endposition über eine diskrete Rastskala des Generators der Stillstandposition zugeordnet wird, wobei die diskrete Rastskala über eine Winkelteilung am Generator vorgegeben ist, die durch eine Arretiernuten- und/oder Pol-Verteilung über einen Generator-Ring, bzw. Stator- und/oder Rotorring vorgegeben ist.

6. Verfahren nach einem der Ansprüche 1 bis 5 **dadurch gekennzeichnet, dass** beim Abbremsen die Polschuhe des Generator-Rotors erregt werden mit einer Erregung (S5), die von einer Erregungsregelung in Abhängigkeit einer Erregungsbrems-Regelgröße vorgegeben wird, wobei die Erregungsbrems-Regelgröße eine oder mehrere Größen umfasst, die ausgewählt sind aus der Gruppe von Größen umfassend: Drehzahl, Verzögerung, Außentemperatur, Windgeschwindigkeit.

7. Verfahren nach einem der Ansprüche 1 bis 6 **dadurch gekennzeichnet, dass** beim Abbremsen für eine aerodynamische Bremswirkung (S3) ein Rotorblatt des Rotors aus dem Wind gepitcht wird, wobei eine Luftbrems-Regelgröße eine oder mehrere Größen umfasst, die ausgewählt sind aus der Gruppe von Größen umfassend: Drehzahl, Verzögerung, Außentemperatur, Windgeschwindigkeit.

8. Verfahren nach einem der Ansprüche 1 bis 7 **dadurch gekennzeichnet, dass** beim Abbremsen eine mechanische Bremse mit einer Brems-Zustellung zugestellt wird (S6, S8), die von einer Zustell-Bremsregelung in Abhängigkeit einer Brems-Zustell-Regelgröße vorgegeben wird, wobei die Brems-Zustell-Regelgröße eine oder mehrere Größen umfasst, die ausgewählt sind aus der Gruppe von Größen umfassend: Drehzahl, Position, Außentemperatur, Windgeschwindigkeit.

9. Verfahren nach einem der Ansprüche 1 bis 8 **dadurch gekennzeichnet, dass**
- die von einer Zustell-Bremsregelung vorgegebene Brems-Zustellung kalibriert wird (S7), anhand einer Kalibrierbremsung, und/oder
- die Zustell-Bremsregelung als ein offenes System zur lernenden Optimierung der Brems-Zustellung ausgebildet ist, anhand einer Vielzahl von Betriebsbremsungen.

10. Verfahren nach einem der Ansprüche 1 bis 9 **dadurch gekennzeichnet, dass** zum Feststellen und/oder Arretieren (S-III) in der Stillstandposition die mechanische Feststellvorrichtung automatisch zugestellt wird, durch Reibschluss und/oder Formschluss.

11. Verfahren nach einem der Ansprüche 1 bis 10 **dadurch gekennzeichnet, dass** die gemäß der voreingestellten Endposition angefahrene Stillstandposition einer anlagenfest vorgegebenen Arretierposition zugeordnet ist.

12. Verfahren nach Anspruch 11 **dadurch gekennzeichnet, dass** die Arretierposition durch eine Arretierbolzen-Aufnahme, wie einem Arretierloch, einer Arretiernut oder dergleichen vorgegeben ist.

13. Verfahren nach einem der Ansprüche 1 bis 12 **dadurch gekennzeichnet, dass** eine Feststellpositionsverteilung und/oder eine Arretierpositionsverteilung auf eine Pol-Verteilung und/oder Arretiernuten-Verteilung derart abgestimmt ist, dass eine Arretierposition der Arretierpositionsverteilung mit einer durch ein Rastmoment bedingten Raststellung des Generator-Rotors übereinstimmt.

14. Regeleinrichtung für eine Windenergieanlage, ausgebildet zur Ausführung eines Verfahrens nach einem der Ansprüche 1 bis 13.

15. Computerprogrammprodukt mit Computer-implementierbaren Anweisungen, das nach dem Laden und Ausführen in einem Computersystem oder dergleichen Regeleinerichtung, die Schritte eines Verfahrens nach einem oder mehreren der Ansprüche 1 bis 13 ausführen kann.

16. Digitales Speichermedium, zur Anbindung an ein Computersystem oder dergleichen Regeleinrichtung, mit elektronisch auslesbaren Computer-implementierbaren Anweisungen, die so mit einem programmierbaren Computersystem oder dergleichen Regeleinrichtung zusammenwirken können, dass ein Verfahren nach einem der Ansprüche 1 bis 13 ausgeführt wird.

17. Windenergieanlage mit einer Gondel an der ein windantreibbarer Rotor, über eine Rotornabe an einen Generator antriebsgekoppelt ist, wobei der Rotor zum Stillstand gebracht und arretiert werden kann, durch Abbremsen, Positionieren, Arretieren **gekennzeichnet durch** eine Regeleinrichtung, die ausgebildet ist:
- eine Eingabe einer Endposition aufzunehmen,
- eine Abbremsung des Rotors (3) auf eine der Endposition zugeordnete Stillstandposition zu regeln, und
- beim Positionieren für die vorgegebene Endposition den Rotor automatisiert auf bis zum Stillstand auf der Stillstandposition abzubremsen, wobei die Stillstandposition unter Nutzung eines Rastmoments des Generators als Raster für ein Feststellen und/oder eine Arretierung eingestellt wird (S6), wobei eine Endposition des Rotors vorgegeben wird, indem eine Winkelstellung des Rotors vorgegeben wird und die Winkelstellung einer Rastposition des Generators zugeordnet wird,
- zum Feststellen und/oder Arretieren in der Stillstandposition das Zustellen einer mechanischen Feststellvorrichtung zu erfassen.

18. Windenergieanlage nach Anspruch 17, **dadurch gekennzeichnet, dass** eine Feststellpositionsverteilung und/oder eine Arretierpositionsverteilung auf eine Pol-Verteilung und/oder Arretiernuten-Verteilung derart abgestimmt ist, dass eine Arretierposition der Arretierpositionsverteilung mit einer durch ein Rastmoment bedingten Raststellung des Generator-Rotors übereinstimmt.

19. Windenergieanlage nach einem der Ansprüche 17 oder 18 **gekennzeichnet durch**
- eine mechanische Betriebsbremse (40, 40'), und/oder
- eine aerodynamische Blattbremse (60), und/oder
- eine elektro-magnetische Generatorbremse (70), und/oder
- eine mechanische Feststellvorrichtung (50), zustellbar **durch** Reibschluss und/oder Formschluss, wobei eine oder mehrere der Bremsen (40, 40', 50, 60, 70) an eine Regeleinrichtung (30) zur Regelung der Bremswirkung angeschlossen sind.

20. Windenergieanlage nach einem der Ansprüche 17 bis 19 **dadurch gekennzeichnet, dass** die mechanische Betriebsbremse (40) und die mechanische Feststellvorrichtung (50) in einer Scheibenbremse integriert sind, wobei
- eine Bremsscheibe an einem drehenden Teil der Windenergieanlage, und/oder an einem Rotornabengehäuse (15) und/oder einem Generator-Rotor (7.1), und
- ein Bremsmittel und/oder eine Bremsbacke und/oder ein Arretierbolzen an einem feststehenden Teil der Windenergieanlage, und/oder an einem Maschinenhausgehäuse (12) und/oder einem Generator-Stator (7.2) angebracht ist.

21. Windenergieanlage nach Anspruch 20 **dadurch gekennzeichnet, dass** eine Bremsbacke am feststehenden Teil der Windenergieanlage zum Zustellen an die Bremsscheibe ausgebildet ist und die Bremsscheibe eine Anzahl von Arretiernuten aufweist, die einer Anzahl von in die Arretiernuten eingreiffähigen Arretierbolzen zugeordnet sind.

22. Windenergieanlage nach einem der Ansprüche 17 bis 21 **dadurch gekennzeichnet, dass**
- ein Sensorsystem (230) an eine Regeleinrichtung (30) zur Regelung der Bremswirkung angeschlossen ist, wobei das Sensorsystem (230) einen Inkrementalgeber (Sa, Sn) und/oder einen Windmesser (Sv) aufweist und/oder das Sensorsystem zur Messung von Brems-Regelgrößen ausgebildet ist, die ausgewählt sind aus der Gruppe von Größen umfassend: Drehzahl, Position, Außentemperatur, Windgeschwindigkeit, und
- an die Regeleinrichtung (30) ein Eingabeterminal (31, 31', 31") und/oder ein Taster und/oder ein Monitor zur Eingabe der Endposition angeschlossen ist, und/oder
- an die Regeleinrichtung eine lernfähige Kalibriereinrichtung angeschlossen oder integriert ist.

## Claims

1. Method for operating a wind turbine (1000), wherein - in the event of servicing or the like, in which the wind turbine is stopped for operational reasons - the rotor (3) is brought to a standstill and secured, having the step of:
- braking the rotor (3),
- positioning the rotor (3) at a standstill position,
- securing the rotor (3) in the standstill position (P1, P2), wherein, furthermore,
- an end position is predetermined (S2),
- the rotor (3) is braked in a controlled manner to a standstill position which is associated with the end position (S-I), and
- for positioning (S-II) for the predetermined end position, the rotor is automatically braked to a standstill at the standstill position, wherein
- in order to secure (S-III) and/or lock in the standstill position, a mechanical securing device is positioned, **characterised in that** the standstill position, using a detent torque of the generator, is adjusted as a grid for securing and/or locking (S6), wherein an end position of the rotor is predetermined by an angular position of the rotor being predetermined and the angular position being associated with a locking position of the generator.

2. Method according to claim 1, **characterised in that**,
- during the securing operation, a generator/rotor (7.1) is secured to a generator/stator (7.2), and/or,
- during the securing operation, a rotor hub housing (15) is secured to a machine housing (12) and/or,
- during the securing operation, a rotor hub (9) and/or a bearing for a generator/rotor (7.1) is secured, wherein
- the securing operation is carried out in a positive-locking manner by means of locking, and/or
- the securing operation is carried out in a frictionally engaging manner by means of a mechanical braking action.

3. Method according to claim 1 or claim 2, **characterised in that**, for the braking operation (S-I),
- a mechanical braking action is positioned in a controlled manner (S6, S8) and/or
- an aerodynamic braking action is produced in a controlled manner (S3), and/or
- an excitation of the generator is controlled with a braking action being produced (S5),
wherein the braking action extends beyond a delay which is caused by production of current or another load.

4. Method according to any one of the preceding claims, **characterised in that** at least a speed and/or a delay of the rotor is measured (S4) during the braking operation (S-I) and is used to control the braking operation (S-II).

5. Method according to any one of claims 1 to 4, **characterised in that** a continuous angular adjustment scale is associated with an end position by means of a discrete catch scale of the generator of the standstill position, wherein the discrete catch scale is predetermined by means of an angular division on the generator, which is predetermined by means of a locking groove and/or pole distribution over a generator ring or stator and/or rotor ring.

6. Method according to any one of claims 1 to 5, **characterised in that**, during the braking operation, the pole shoes of the generator/rotor are excited with an excitation (S5) which is predetermined by means of an excitation control in accordance with an excitation braking adjustment variable, wherein the excitation braking adjustment variable comprises one or more variables which are selected from the group of variables comprising: speed, delay, ambient temperature, wind speed.

7. Method according to any one of claims 1 to 6, **characterised in that**, during the braking operation for an aerodynamic braking action (S3), a rotor blade of the rotor is pitched out of the wind, wherein an air brake control variable comprises one or more variables which are selected from the group of variables comprising: speed, delay, ambient temperature, wind speed.

8. Method according to any one of claims 1 to 7, **characterised in that**, during the braking operation, a mechanical brake is positioned with a brake positioning (S6, S8) which is predetermined by means of a positioning brake control in accordance with a brake positioning control variable, wherein the brake positioning control variable comprises one or more variables which are selected from the group of variables comprising: speed, position, ambient temperature, wind speed.

9. Method according to any one of claims 1 to 8, **characterised in that**
- the brake positioning predetermined by a positioning brake control is calibrated (S7) using a calibration brake, and/or
- the positioning brake control is constructed as an open system for intelligent optimisation of the brake positioning, using a large number of operating braking actions.

10. Method according to any one of claims 1 to 9, **characterised in that**, in order to secure and/or lock (S-III) in the standstill position, the mechanical securing device is automatically positioned by means of frictional engagement and/or positive-locking engagement.

11. Method according to any one of claims 1 to 10, **characterised in that** the standstill position which is approached in accordance with the predetermined end position is associated with a locking position which is predetermined so as to be fixed to the turbine.

12. Method according to claim 11, **characterised in that** the locking position is predetermined by means of a securing pin receiving member, such as a locking hole, a locking groove or the like.

13. Method according to any one of claims 1 to 12, **characterised in that** a securing position distribution and/or a locking position distribution is adapted to a pole distribution and/or locking groove distribution in such a manner that a locking position of the locking position distribution corresponds to a locking position of the generator/rotor determined by a detent torque.

14. Control device for a wind turbine constructed to carry out a method according to any one of claims 1 to 13.

15. Computer program product which has instructions which can be implemented by means of a computer and which, after loading and execution in a computer system or similar control device, can carry out the steps of a method according to one or more of claims 1 to 13.

16. Digital storage medium for connection to a computer system or similar control device, having electronically readable instructions which can be implemented by a computer and which can cooperate with a programmable computer system or similar control device in such a manner that a method according to any one of claims 1 to 13 is carried out.

17. Wind turbine having a pod to which a rotor which can be driven by the wind is coupled in terms of driving to a generator by means of a rotor hub, wherein the rotor can be brought to a standstill and locked by means of braking, positioning, locking, **characterised by** a control device which is constructed:
- to receive an input of an end position,
- to control a braking of the rotor (3) to a standstill position which is associated with the end position, and,
- during positioning for the predetermined end position, to brake the rotor automatically to a standstill at the standstill position, wherein the standstill position using a detent torque of the generator is adjusted as a grid for securing and/or locking (S6), wherein an end position of the rotor is predetermined by an angular position of the rotor being predetermined and the angular position being associated with a locking position of the generator,
- for securing and/or locking in the standstill position, to detect the positioning of a mechanical securing device.

18. Wind turbine according to claim 17, **characterised in that** a securing position distribution and/or a locking position distribution is adapted to a pole distribution and/or locking groove distribution in such a manner that a locking position of the locking position distribution corresponds to a locking position of the generator/rotor determined by a detent torque.

19. Wind turbine according to either claim 17 or claim 18, **characterised by**
- a mechanical operating brake (40, 40') and/or
- an aerodynamic blade brake (60), and/or
- an electromagnetic generator brake (70), and/or
- a mechanical securing device (50), which can be positioned by means of frictional engagement and/or positive-locking engagement, wherein one or more of the brakes (40, 40', 50, 60, 70) are connected to a control device (30) in order to control the brake action.

20. Wind turbine according to any one of claims 17 to 19, **characterised in that** the mechanical operating brake (40) and the mechanical securing device (50) are integrated in a disc brake, wherein
- a brake disc is fitted to a rotating component of the wind turbine, and/or to a rotor hub housing (15) and/or a generator/rotor (7.1), and
- a braking means and/or a brake jaw and/or a locking pin is fitted to a fixed component of the wind turbine and/or to a machine housing (12) and/or a generator/stator (7.2).

21. Wind turbine according to claim 20, **characterised in that** a brake jaw is constructed on the fixed component of the wind turbine in order to position on the brake disc and the brake disc has a number of locking grooves which are associated with a number of locking pins which can engage in the locking grooves.

22. Wind turbine according to any one of claims 17 to 21, **characterised in that**
- a sensor system (230) is connected to a control device (30) for controlling the braking action, wherein the sensor system (230) has an incremental encoder (Sa, Sn) and/or a wind measuring device (Sv) and/or the sensor system is constructed for measuring brake control variables which are selected from the group of variables comprising: speed, position, ambient temperature, wind speed, and
- an input terminal (31, 31', 31") and/or a sensor and/or a monitor for inputting the end position is/are connected to the control device (30), and/or
- an intelligent calibration device is connected to or integrated in the control device.

## Revendications

1. Procédé permettant de faire fonctionner une éolienne (1000), selon lequel, dans le cas d'un entretien ou dans un cas similaire d'une mise hors service de l'éolienne pour des raisons d'exploitation, le rotor (3) est arrêté et immobilisé, le procédé comprenant les étapes consistant à :
- freiner le rotor (3),
- positionner le rotor (3) jusqu'à ce qu'il occupe une position d'arrêt,
- immobiliser le rotor (3) dans la position d'arrêt (P1, P2),
dans lequel en outre
- une position finale est prédéfinie (S2),
- le rotor (3) est freiné de façon commandée de manière à ce qu'il occupe une position d'arrêt associée à la position finale (S-I), et
- en vue du positionnement (S-II) pour la position finale prédéfinie, le rotor est freiné de manière automatisée jusqu'à ce qu'il s'arrête et occupe la position d'arrêt, dans lequel
- en vue de l'immobilisation (S-III) et/ou du blocage dans la position d'arrêt, un dispositif d'immobilisation mécanique est bloqué,
**caractérisé en ce que** la position d'arrêt est réglée (S6) en utilisant un couple de crantage du générateur en tant que dispositif de crantage pour une immobilisation et/ou un blocage, dans lequel une position finale du rotor est prédéfinie par le fait qu'une position angulaire du rotor est prédéfinie et que la position angulaire est associée à une position de crantage du générateur.

2. Procédé selon la revendication 1, **caractérisé en ce que**
- lors de l'immobilisation, un rotor de générateur (7.1) est immobilisé sur un stator de générateur (7.2), et/ou
- lors de l'immobilisation, un carter de moyeu de rotor (15) est immobilisé sur un carter de salle des machines (12), et/ou
- lors de l'immobilisation, un moyeu de rotor (9) et/ou un palier pour un rotor de générateur (7.1) est immobilisé, dans lequel
- l'immobilisation est mise en oeuvre par coopération de formes au moyen d'un blocage, et/ou
- l'immobilisation est réalisée par friction au moyen d'une action de freinage mécanique.

3. Procédé selon la revendication 1 ou 2, **caractérisé en ce que** pour le freinage (S-I)
- une action de freinage mécanique est bloquée de manière commandée (S6, S8), et/ou
- une action de freinage aérodynamique est produite de manière commandée (S3), et/ou
- une excitation du générateur est commandée avec production d'une action de freinage (S5), l'action de freinage allant au-delà d'un ralentissement provoqué par une production d'électricité ou une autre charge.

4. Procédé selon l'une quelconque des revendications précédentes, **caractérisé en ce qu'**au moins une vitesse de rotation et/ou une décélération du rotor lors du freinage (S-I) sont mesurées (S4) et utilisées pour commander le freinage (S-II).

5. Procédé selon l'une quelconque des revendications 1 à 4, **caractérisé en ce qu'**une échelle de positions angulaires continue d'une position finale est associée à la position d'arrêt par l'intermédiaire d'une échelle de crantage discrète du générateur, dans lequel l'échelle de crantage discrète est prédéfinie par une division angulaire sur le générateur, qui est prédéfinie par une répartition des rainures et/ou des pôles de blocage sur un anneau de générateur, ou un anneau de stator et/ou de rotor.

6. Procédé selon l'une quelconque des revendications 1 à 5, **caractérisé en ce que**, lors du freinage, les pièces polaires du rotor de générateur sont excitées par une excitation (S5), qui est prédéfinie par une commande d'excitation en fonction d'une grandeur de commande de freinage d'excitation, dans lequel la grandeur de commande de freinage d'excitation comporte une ou plusieurs grandeurs, qui sont choisies dans le groupe des grandeurs comprenant : la vitesse de rotation, la décélération, la température extérieure, la vitesse du vent.

7. Procédé selon l'une quelconque des revendications 1 à 6, **caractérisé en ce que**, lors du freinage pour une action de freinage aérodynamique (S3), une pale de rotor du rotor est amenée à tanguer du fait du vent, dans lequel une grandeur de commande de freinage à air comporte une ou plusieurs grandeurs, qui sont choisies dans le groupe des grandeurs comprenant : la vitesse de rotation, la décélération, la température extérieure, la vitesse du vent.

8. Procédé selon l'une quelconque des revendications 1 à 7, **caractérisé en ce que**, lors du freinage, un frein mécanique est bloqué au moyen d'un blocage de frein (S6, S8), qui est prédéfini par une commande de freinage de blocage en fonction d'une grandeur de commande de blocage de freinage, dans lequel la grandeur de commande de blocage de freinage comporte une ou plusieurs grandeurs, qui sont choisies dans le groupe de grandeurs comprenant : la vitesse de rotation, la position, la température extérieure, la vitesse du vent.

9. Procédé selon l'une quelconque des revendications 1 à 8, **caractérisé en ce que**
- le blocage de freinage prédéfini par une commande de freinage de blocage est étalonné (S7), sur la base d'un freinage d'étalonnage, et/ou
- la commande de freinage de blocage est réalisée sous la forme d'un système ouvert permettant l'optimisation par adaptation du blocage de freinage, sur la base d'une pluralité de freinages de service.

10. Procédé selon l'une quelconque des revendications 1 à 9, **caractérisé en ce que**, en vue de l'immobilisation et/ou du blocage (S-III) dans la position d'arrêt, le dispositif d'immobilisation mécanique est bloqué automatiquement, par friction et/ou coopération de formes.

11. Procédé selon l'une quelconque des revendications 1 à 10, **caractérisé en ce que** la position d'arrêt atteinte conformément à la position finale préréglée est associée à une position de blocage prédéfinie de manière fixe en appui.

12. Procédé selon la revendication 11, **caractérisé en ce que** la position de blocage est prédéfinie par un logement de boulon de blocage, tel qu'un trou de blocage, une rainure de blocage ou similaire.

13. Procédé selon l'une quelconque des revendications 1 à 12, **caractérisé en ce qu'**une répartition des positions d'immobilisation et/ou une répartition des positions de blocage sont adaptées à une répartition des pôles et/ou à une répartition des rainures de blocage, de telle manière qu'une position de blocage de la répartition des positions de blocage coïncide avec une position crantée du rotor de générateur provoquée par un couple de crantage.

14. Dispositif de commande pour une éolienne, conçu pour mettre en oeuvre un procédé selon l'une quelconque des revendications 1 à 13.

15. Produit-programme informatique comprenant des instructions pouvant être implémentées par ordinateur, qui, après avoir été chargé et exécuté dans un système informatique ou un dispositif de commande similaire, peut mettre en oeuvre les étapes d'un procédé selon l'une ou plusieurs des revendications 1 à 13.

16. Support numérique, destiné à être raccordé à un système informatique ou à un dispositif de commande similaire, comprenant des instructions pouvant être lues de manière électronique et pouvant être implémentées par ordinateur, qui peuvent coopérer avec un système informatique programmable ou similaire, de sorte qu'un procédé selon l'une quelconque des revendications 1 à 13 est mis en oeuvre.

17. Eolienne comprenant une nacelle à laquelle un rotor pouvant être entraîné par le vent est couplé en transmission par l'intermédiaire d'un moyeu de rotor sur un générateur, dans laquelle le rotor peut être arrêté et bloqué, par freinage, positionnement, blocage, **caractérisée par** un dispositif de commande, qui est conçu :
- pour recevoir une entrée d'une position finale,
- pour commander un freinage du rotor (3) de manière à ce qu'il atteigne une position d'arrêt associée à la position finale, et
- lors du positionnement pour la position finale prédéfinie, pour freiner le rotor de manière automatisée jusqu'à ce qu'il s'arrête et occupe la position d'arrêt, dans laquelle la position d'arrêt est réglée au moyen d'un couple de crantage du générateur en tant que dispositif de crantage pour une immobilisation et/ou un blocage (S6), dans laquelle une position finale du rotor est prédéfinie, par le fait qu'une position angulaire du rotor est prédéfinie et que la position angulaire est associée à une position de crantage du générateur,
- en vue d'une immobilisation et/ou d'un blocage dans la position d'arrêt, pour détecter le blocage d'un dispositif d'immobilisation mécanique.

18. Eolienne selon la revendication 17, **caractérisée en ce qu'**une répartition des positions d'immobilisation et/ou une répartition des positions de blocage sont adaptées à une répartition des pôles et/ou à une répartition des rainures de blocage, de telle manière qu'une position de blocage de la répartition des positions de blocage coïncide avec une position crantée du rotor de générateur provoquée par un couple de crantage.

19. Eolienne selon l'une quelconque des revendications 17 et 18, **caractérisée par**
- un frein de service mécanique (40, 40'), et/ou
- un frein à lame aérodynamique (60), et/ou
- un frein de générateur électromagnétique (70), et/ou
- un dispositif d'immobilisation mécanique (50), pouvant être bloqué par friction et/ou coopération de formes, dans laquelle un ou plusieurs des freins (40, 40', 50, 60, 70) sont raccordés à un dispositif de commande (30) pour commander l'action de freinage.

20. Eolienne selon l'une quelconque des revendications 17 à 19, **caractérisée en ce que** le frein de service mécanique (40) et le dispositif d'immobilisation mécanique (50) sont intégrés dans un frein à disque, dans laquelle
- un disque de frein est monté sur une partie rotative de l'éolienne, et/ou sur un carter de moyeu de rotor (15) et/ou un rotor de générateur (7.1), et
- un moyen de freinage et/ou une mâchoire de serrage et/ou un boulon de blocage sont montés sur une partie fixe de l'éolienne, et/ou sur un carter de salle des machines (12) et/ou un stator de générateur (7.2).

21. Eolienne selon la revendication 20, **caractérisée en ce qu'**une mâchoire de frein est constituée sur la partie fixe de l'éolienne en vue d'un blocage sur le disque de frein et le disque de frein comprend un certain nombre de rainures de blocage, qui sont associées à un certain nombre de boulons de blocage aptes à s'insérer dans les rainures de blocage.

22. Eolienne selon l'une quelconque des revendications 17 à 21, **caractérisée en ce que**
- un système de détection (230) est raccordé à un dispositif de commande (30) pour commander l'action de freinage, dans laquelle le système de détection (230) comprend un codeur incrémental (Sa, Sn) et/ou un anémomètre (Sv) et/ou le système de détection est conçu pour mesurer des grandeurs de commande de freinage, qui sont choisies dans le groupe des grandeurs comprenant : la vitesse de rotation, la position, la température extérieure, la vitesse du vent, et
- un terminal d'entrée (31, 31', 31") et/ou un palpeur et/ou un écran permettant d'entrer la position finale sont raccordés au dispositif de commande (30), et/ou
- un dispositif d'étalonnage adaptatif est raccordé ou intégré au dispositif de commande.
